(19) **Europäisches Patentamt**
**European Patent Office**
**Office européen des brevets**

(11) **EP 2 119 491 B1**

(12) **EUROPEAN PATENT SPECIFICATION**

(45) Date of publication and mention
of the grant of the patent:
**22.02.2012 Bulletin 2012/08**

(51) Int Cl.:
*B01D 53/86* (2006.01)  *B01D 53/94* (2006.01)
*B01J 23/63* (2006.01)  *B01J 23/66* (2006.01)
*B01J 23/68* (2006.01)  *B01J 23/72* (2006.01)
*B01J 23/89* (2006.01)  *B01J 23/90* (2006.01)
*B01J 37/08* (2006.01)  *B01J 38/02* (2006.01)
*F01N 3/02* (2006.01)  *B22F 1/02* (2006.01)
*B22F 9/24* (2006.01)

(21) Application number: **08703402.1**

(22) Date of filing: **17.01.2008**

(86) International application number:
**PCT/JP2008/050547**

(87) International publication number:
**WO 2008/088027 (24.07.2008 Gazette 2008/30)**

(54) **DEVICE FOR PURIFICATION OF EXHAUST GAS**

VORRICHTUNG ZU REINIGUNG VON ABGAS

DISPOSITIF POUR LA PURIFICATION DE GAZ D'ECHAPPEMENT

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **19.01.2007 JP 2007010742**

(43) Date of publication of application:
**18.11.2009 Bulletin 2009/47**

(73) Proprietor: **Kabushiki Kaisha Toyota Chuo Kenkyusho**
**Aichi-Gun**
**Aichi 480-1192 (JP)**

(72) Inventors:
• **KAYAMA, Tomoyuki**
  **Aichi-gun**
  **Aichi 480-1192 (JP)**
• **YAMAZAKI, Kiyoshi**
  **Aichi-gun**
  **Aichi 480-1192 (JP)**
• **MATSUNAGA, Shinichi**
  **Aichi-gun**
  **Aichi 480-1192 (JP)**
• **SHINJOH, Hirofumi**
  **Aichi-gun**
  **Aichi 480-1192 (JP)**

(74) Representative: **Kramer - Barske - Schmidtchen**
**Landsberger Strasse 300**
**80687 München (DE)**

(56) References cited:
**EP-A2- 1 378 289       WO-A1-2004/043591**
**JP-A- 2002 364 338    JP-A- 2004 082 000**
**JP-A- 2006 291 779    JP-A- 2006 523 528**
**JP-A- 2007 313 443**

**Description**

**Technical Field**

The present invention relates to a device for purification of exhaust gas, and more particularly a device for purification of exhaust gas which can suitably be used for purifying exhaust gas containing particulate matters.

**Background of the Invention**

Concerning a gasoline engine, hazardous components in exhaust gas has been steadily decreased by strict regulations of exhaust gas and advance in technology which can satisfy the regulations. However, concerning a diesel engine, there are still many technical problems left with purification of exhaust gas because the exhaust gas contains particulate matters (particulate: such as soot composed of carbon particulates and soluble organic fractions (SOF), hereinafter referred to as "PM").

Accordingly, in recent years, the oxidation catalyst capable of oxidizing the PM, particularly soot components, at a low temperature have been developed. For example, Japanese Unexamined Patent Application Publication No. Hei 1-318715 (Document 1) discloses a device for purification of exhaust gas comprising: a honeycomb monolith including a catalyst for oxidizing NO in exhaust gas to $NO_2$; a unit for converting NO to $NO_2$ by passing the exhaust gas through the catalyst; and a filter disposed downstream of the unit to trap $NO_2$ containing gas emitted from the unit and to burn PM in the exhaust gas with the $NO_2$ containing gas. However, the device for purification of exhaust gas described in Document 1 is not capable of oxidizing PM only with oxygen in air as an oxidant.

Moreover, Japanese Unexamined Patent Application Publication No. 2004-42021 (Document 2) discloses a catalyst composition containing ceria ($CeO_2$) that is stabilized with silver (Ag) and/or cobalt (Co), the catalyst composition facilitating soot oxidation during the regeneration of DPF. Here, it is stated that a molar ratio between Ag and ceria is preferably in a range from 4:1 to 1:4 (which corresponds to a content (mol%) of Ag relative to a total amount of Ce and Ag from 20 mol% to 80 mol%), and more preferably in a range from 3:1 to 1:3 (which corresponds to a content (mol%) of Ag relative to the total amount of Ce and Ag from 33 mol% to 67 mol%). Moreover, it is reported that a mixture having an Ag content at 75 mol% and a Ce content at 25 mol% has the highest activity. Meanwhile, it is reported that a mixture having an Ag content at 25 mol% and a Ce content at 75 mol% is also active in soot oxidation even when oxygen is used as a sole oxidant. In this case, a reactive oxygen species can be produced in the gas phase. Here, a method of manufacturing the catalyst described in Document 2 is a method of obtaining the catalyst composition having a porosity centered around 70 to 200 Å and a high specific surface area in a range from 14 to 150 $m^2$/g. The catalyst composition is manufactured by impregnating a cellulose material (Whatman (registered trademark) Filter Paper 540) with a nitrate precursor, drying the material at room temperature overnight, and then burning the cellulose under conditions at 600°C for two hours.

There are roughly two evaluation methods employed in this Document 2. One is a method in which a decomposition rate (an oxidation rate) of a sample obtained by blending diesel soot and the catalyst composition to loose-contact with a spatula is measured by TGA under a 10 % oxygen atmosphere, for example. The other is a method in which a pressure drop balance test is conducted by means of DPF. In the TGA evaluation of the catalyst composition having an Ag content of 75 ml%, for example, an oxidation rate at 323 °C is equal to 0.117 $hr^{-1}$ even in favourable conditions of $NO_2$: 1010 ppm and $O_2$: 10%, and by use of the best catalyst composition. In other words, a proportion of the soot to be oxidized in an hour is merely equal to 11.7% even under the condition where there is a sufficient amount of a powerful oxidant such as $NO_2$. On the other hand, in the pressure drop balance test, an Ag-Ce based catalyst composition CPF-15 is deemed to be capable of oxidizing most of the PM at a temperature around 325°C, but this test result contradicts the foregoing test result. Accordingly, the present inventors consider that soot components or the like slips through in an actual pressure drop balance test. Hence it is not possible to oxidize PM such as soot sufficiently at a low temperature by the catalyst compositions described in Document 2, i.e. merely by presence of a set of Ag and $CeO_2$ or a set of Co and $CeO_2$.

Furthermore, Japanese Unexamined Patent Application Publication No. 2006-198563 (Document 3) discloses a chemical reaction device constructed by forming an electrode material such as platinum and a catalyst material such as $Ca_{12}Al_{14}O_{33}$ and the like of calcium aluminates and nickel oxide on a surface of an oxygen ion-conductive ceramic such as zirconium oxide and cerium oxide. Here, it is stated that PM can be directly oxidized and removed on the surface of the anode by the reaction of:

$$C+2O^{2-} \rightarrow CO^2+4e^-$$

using oxygen ions supplied via a solid electrolyte. However, an oxygen reactive species in a method described in Document 3 is $O^{2-}$ generated at the anode, and $O^{2-}$ is not so adequate for PM oxidation as an oxygen reactive species.

Accordingly, PM such as soot cannot be sufficiently oxidized at a low temperature.

Moreover, Japanese Unexamined Patent Application Publication No. 2005-329318 (Document 4) discloses a diesel particulate filter disposed in an exhaust channel of a diesel engine to trap PM in exhaust gas. In the diesel particulate filter, a coat layer is formed on wall surfaces of the exhaust gas channel of a filer body, the coat layer containing a catalytic noble metal (at least one of Rh and Pt) for burning off the PM by oxidation and composite oxide particles containing Ce and Zr. However, the mere utilization of oxygen storage/release performance of $CeO_2$, which is used for a three-way catalyst as in the diesel particulate filter described in Document 4, does not allow oxygen to be released, if not in the rich atmosphere. Accordingly, no particular effect is observed for lowering of PM burning temperature, and PM such as soot cannot be sufficiently oxidized at a low temperature as well. WO 2004/043591 A1 discloses a catalyst material having good stability in air and in cyclic operation with respect to a low-temperatur water-gas shift reaction, wherein the catalyst material catalyzes oxidation of CO to $CO_2$, wherein a specific catalyst includes Au supported on a substrate in an amount of from 0.01 to 1.0 atomic %, based on the total mass of Au and substrate. In one example, WO 2004/043591 A1 discloses a material containing 8 atomic % Au supported on $CeO_2/La_2O_3$

## Disclosure of the Invention

The present invention has been made in view of the above-described problems of the conventional techniques. An object of the present invention is to provide a device for purification of exhaust gas in which: oxygen reactive species particularly preferable for oxidation of particulate matters (PM) are generated; the oxygen reactive species are stably supplied under a condition where an oxidation catalyst is placed; thereby, particulate matters in exhaust gas emitted from an internal-combustion engine can efficiently be oxidized in a lower temperature range; and the device can be regenerated by a relatively low temperature regeneration treatment even when the particulate matters are deposited therein.

As a result of earnest studies for attaining the above object, the present inventors have found out that the object is accomplished by providing an oxidation catalyst according to claim 1.

In the device for purification of exhaust gas of the present invention, it is preferable that: the first metal be an oxygen-reactive-species generating member which generates an oxygen reactive species by extracting oxygen from an oxygen-containing substance; the second metal oxide be an oxygen-reactive-species transporting member which is capable of transporting and/or storing the oxygen reactive species; and the oxidation catalyst functions as an oxygen-reactive-species supplying member.

Moreover, the oxygen reactive species is preferably an adsorbed oxygen species to be described below, and particularly preferably a molecular adsorbed oxygen species.

In addition, the catalytic metal support according to the present invention may be (i) a film-form catalytic metal support having a thickness of 3 nm or larger, or (ii) a particulate catalytic metal support having an average primary particle diameter of 7 nm or larger. In the case of (ii), it is particularly preferable that the oxidation catalyst be an aggregate including:

> a particulate catalytic metal support made of the first metal and constituting a core; and
> metal oxide particles made of the second metal oxide and having an average primary particle diameter in a range from 1 to 100 nm, the metal oxide particles surrounding the catalytic metal support.

Furthermore, a layer of the second metal oxide according to the present invention preferably has a thickness of 10 $\mu$m or smaller.

In addition, the first metal according to the present invention preferably contains Ag, is further preferably an alloy containing Ag, and is particularly preferably Ag.

Furthermore, the second metal oxide according to the present invention is preferably at least one selected from the group consisting of oxides of La, Ce, Pr, Nd, Pm, Sm, Eu, Gd, Tb, Dy, Ho, Er, Tm, Yb, Lu, Y, Zr, Fe, Ti, A1, Mg, Co, Ni, Mn, Cr, Mo, W, V, Zn and Sn, solid solutions thereof, and composite oxides thereof. Above all, it is particularly preferable that the second metal oxide be any of $CeO_2$ and a composite oxide containing Ce, and further include at least one substance selected from the group consisting of La, Nd, Pr, Sm, Y, Ca, Ti, Fe, Zr, Al, Zn and Sn as an additive metal.

In the above-described device for purification of exhaust gas of the present invention, the metal oxide particles after calcination for 5 hours at 500°C in air preferably have an average particle diameter in a range from 10 to 100 nm; moreover, the metal oxide particles after calcination for 5 hours at 800°C in an atmosphere containing oxygen at 10% by volume and nitrogen at 90% by volume preferably have an average particle diameter in a range from 10 to 400 nm.

The above-described device for purification of exhaust gas of the present invention preferably further comprises:

> a control means for controlling the device for purification of exhaust gas on the basis of a first criterion (A) of a particulate-matter deposit amount, on which a forced regeneration treatment is required, and a second criterion (B) of a particulate-matter deposit amount which is a lower criterion than the first criterion (A), and the control means controlling the device in a way that:

a low temperature regeneration treatment is performed at a second regeneration treatment temperature being lower than a first regeneration treatment temperature for the forced regeneration treatment, when an obtained particulate-matter deposit amount is between the first criterion (A) and the second criterion (B) ; and the forced regeneration treatment is performed, when an obtained particulate-matter deposit amount exceeds the first criterion (A).

As described above, in the above-described device for purification of exhaust gas of the present invention further comprising the control means, oxygen reactive species are preferably continuously generated when the low temperature regeneration treatment is performed; moreover, oxygen reactive species are preferably stored by the metal oxide particles disposed on the catalytic metal support after the forced regeneration treatment is performed.

Moreover, in the above-described device for purification of exhaust gas of the present invention further comprising the control means, it is more preferable that the second regeneration treatment temperature be set to have a plurality of temperature conditions, and the device for purification of exhaust gas be controlled in a way that:

a low temperature regeneration treatment is performed at a lower temperature of the second regeneration treatment temperatures, when an obtained particulate-matter deposit amount is between the first criterion (A) and the second criterion (B); the low temperature regeneration treatment is terminated, when a subsequent particulate-matter deposit amount is below the second criterion (B); and low temperature regeneration treatments are repeated while each second regeneration treatment temperature is sequentially changed to a higher temperature, when the particulate-matter deposit amount is still between the first criterion (A) and the second criterion (B).

The constitution of the device for purification of exhaust gas of the present invention makes it possible to have constitutions to generate an oxygen reactive species particularly preferably for oxidation of particulate matters (PM), and to stably supply the oxygen reactive species in a condition where an oxidation catalyst is placed. Here, although the reason of this accomplishment is not exactly known, the present inventors speculate as follows. Specifically, the present inventors have focused on an oxygen reactive species as a cause why a high activity is not achieved in a conventional technique even under an investigation where lattice oxygen is used. Since lattice oxygen has a problem of supply efficiency to a substance to be oxidized despite its strong oxidizing ability, the inventors speculate the reason along the following first step to fifth steps as the constitution where reactive oxygen species, in the broader sense including all of lattice oxygen, gas phase oxygen and oxygen reactive species generated therefrom, are easily supplied to a substance to be oxidized. Here, even when lattice oxygen is used, the direct use of lattice oxygen itself does not exhibit its effect as in the case of the conventional technique. For this reason, lattice oxygen and gas phase oxygen are not directly used, but are supplied after being converted to "more effective oxygen reactive species".

<First step> Maximum use of adsorbed oxygen species

Here, "adsorbed oxygen species" is a collective term of oxygen reactive species that are easily released. Adsorbed oxygen species can be generated from gas phase oxygen, lattice oxygen or the like, and can be detected by temperature-programmed desorption (TPD) test, isotope exchange test, or the like. Note that the adsorbed oxygen species include oxygen reactive species being stored, absorbed, adsorbed or attached. However, the term "adsorbed" is used here for convenience because the oxygen reactive species are easily released as phenomena.

Exemplified as the adsorbed oxygen species are $O_2$, $O_2^-$, $O_2^{2-}$, $O^-$, $O^{2-}$, and the like. Generally, oxygen has an electron accepting ability; thus, the latter-listed adsorbed species tend to emerge at higher temperatures, and incorporation into lattice oxygen occurs more likely. Moreover, $O_3^-$ generated in equilibrium of $O_3^- \leftrightarrow O^- + O_2$ is also deemed to exist. In addition, adsorbed oxygen species of $O_2$ molecules that are negatively charged to lesser extent are also deemed to exist. Furthermore, polarized $O_2$ molecules also exist, and dissociated and adsorbed oxygen also exists on a noble metal. Although these adsorbed oxygen species do not always have a high activity, the present inventors speculate that giving priority to supplying of oxygen reactive species as described above is advantageous. The above-described adsorbed oxygen species except $O^{2-}$ have an electrophilic property, and a reaction mechanism to draw electrons of soot can be expected.

<Second step> Generation of reactive oxygen species

First of all, what is recalled as reactive-oxygen-species generating means (oxygen-reactive-species generating members) in the field of purification of exhaust gas are noble metals as represented by Pt. It is deemed that $O_2$ is dissociated and adsorbed on many kinds of noble metals to form atomic $O_{ad}$ as a highly active oxygen reactive species. When a substance to be oxidized is a gas such as HC, CO and NO, a certain degree of collision probability can be obtained by their molecular motions, and oxygen reactive species can efficiently be supplied together with, for example, transferring of electrons through noble metals. However, when a substance to be oxidized is solid, supply efficiency is problematic. Thus, reactive oxygen species were earnestly studied mainly in order to enhance the supply efficiency of oxygen reactive species to a solid substance to be oxidized, the present inventors have found out that molecular adsorbed oxygen species among the "adsorbed oxygen species" are particularly preferably used.

In order to generate such oxygen reactive species, it is necessary to adequately adjust the proportion of oxygen to be dissociated and adsorbed. Therefore, in the present invention, it is necessary to use at least one metal (first metal) selected from the group consisting of Ag, Pt, Rh, Pd, Ru, Ir, Os, Au and Cu, and the use of a metal containing Ag is particularly preferable. Note that the first metal must show properties as a metal. For this reason, the first metal preferably have rather large particle diameter. Moreover, Ag has a function of efficiently retaining adsorbed oxygen species, also.

<Third step> Transport and/or storage of adsorbed oxygen species

A substance to be oxidized does not always appear, immediately after adsorbed oxygen species are generated. Moreover, when the substance to be oxidized appears, oxygen being required for generation of adsorbed oxygen species will become insufficient. Therefore, it is preferable that not only transporting means but also storing means for adsorbed oxygen species be included.

Adsorbed oxygen species other than $O_2$ have negative charges. The adsorbed oxygen species is transported by surface diffusion (adsorbed species) and internal diffusion (lattice oxygen). Since the surface diffusion is particularly important for transporting the adsorbed oxygen species, it is necessary to use an oxide of a valence variable metal (second metal) in the present invention. Moreover, from the viewpoint of efficient generation of the adsorbed oxygen species, the internal diffusion is also preferably used. In addition, from the viewpoint of storage of the adsorbed oxygen species, basic materials are more preferable, and $CeO_2$ or composite oxides containing Ce are particularly preferable.

<Fourth step> Role of metals and metal oxides preferable for generation of adsorbed oxygen species

The role of metal oxides for generation of the adsorbed oxygen species is that the use of the oxide of the valence variable metal facilitates the transfer of electric charges among the metals, the metal oxides, gas phase oxygen and lattice oxygen in the metal oxides. From such a viewpoint, the interface between the metal oxide and the metal that can come into contact with the gas phase oxygen is preferably larger. Therefore, a layer made of the metal oxide is preferably not dense. In the present invention, metal oxide particles having an average primary particle diameter in a range from 1 to 400 nm are used.

Moreover, further efficient electron supply to the metal oxide interface and the metal that can come into contact with gas phase oxygen is preferable. Accordingly, from such a viewpoint, metals having a high conductivity are preferable as the metals preferable for the above-described metal-metal oxide interface; Ag, Cu and Au are more preferable; and Ag is particularly preferable. Here, concerning the supply of electrons, it is only necessary that electrons generated at the time of oxidizing soot or the like be supplied to the metal-metal oxide interface. In addition, electrons may also be supplied to the metals from an electric source after an electrode is coated with a metal oxide.

<Fifth step> Supply site of adsorbed oxygen species to substance to be oxidized (particulate matter)

Continuous supply of adsorbed oxygen species becomes difficult when the supply site of the adsorbed oxygen species and the generation site of the adsorbed oxygen species are the same site. Accordingly, in the present invention, the supply site of the adsorbed oxygen species is separated from the generation site of the adsorbed oxygen species, and a transport and/or storage site of the adsorbed oxygen species is used as the supply site. Therefore, in the present invention, metal oxide particles made of the oxide of the second metal which is the transport and/or storage site of the adsorbed oxygen species are disposed on a catalytic metal support made of the first metal which is the generation site of the adsorbed oxygen species; a particulate matter is oxidized on the metal oxide particles. Such a constitution makes it possible to generate the adsorbed oxygen species while the particulate matter is being oxidized. Furthermore, by disposing the supply site to the surface that comes into contact with the substance to be oxidized, the whole contact surface with the substance to be oxidized can act as a reaction site.

In addition, since electron transfer between the oxygen reactive species and the particulate matter occurs at the supply site of the adsorbed oxygen species, it is preferable to facilitate the receiving of electrons generated from oxidation of the particulate matter. From this viewpoint also, it is necessary to use the oxide of the valence variable metal (second metal) in the present invention, and particularly preferably $CeO_2$ or the composite oxides containing Ce.

Here, as an oxidation catalyst according to the present invention, it is particularly preferable to use an aggregate including: a particulate catalytic metal support made of the first metal and constituting a core; and metal oxide particles surrounding the catalytic metal support, the metal oxide particles being made of the oxide of the second metal and having an average primary particle diameter in a range from 1 to 100 nm. This is because such an aggregate provides a lot of the supply sites of the adsorbed oxygen species according to the fifth step and a larger area of the metal-metal oxide interface according to the fourth step. Accordingly, the adsorbed oxygen species can be efficiently generated, and moreover, supply of electric power is no longer necessary.

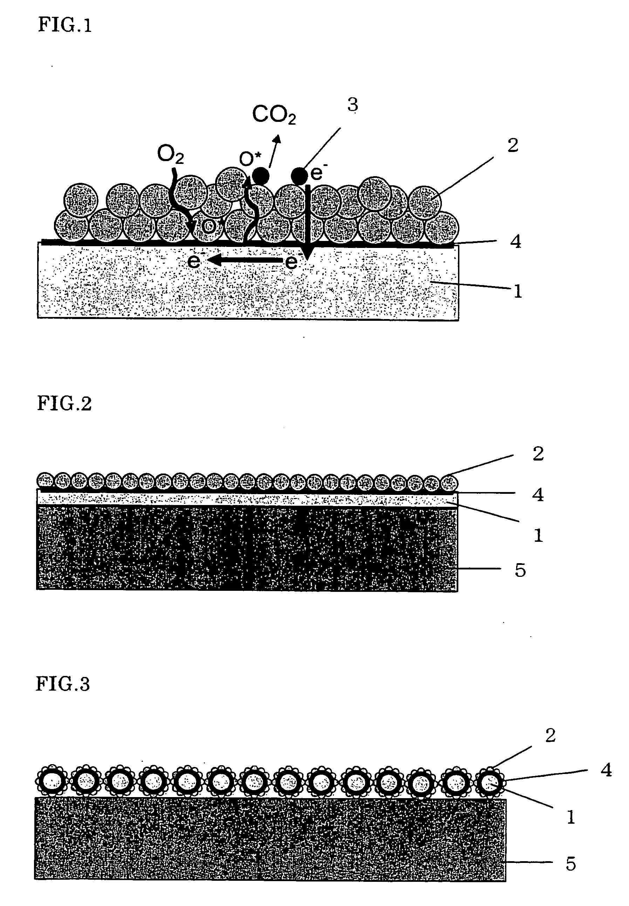

The present inventors speculate that the above-described first to fifth steps are achieved with the oxidation catalyst according to the present invention as shown in Fig. 1, thereby enabling a particulate matter to be sufficiently oxidized at lower temperatures in the present invention. In the oxidation catalyst according to the present invention, metal oxide particles 2 made of the oxide of the second metal are disposed on a catalytic metal support 1 made of the first metal, as shown in Fig. 1. Thereby, particulate matters 3 that are substances to be oxidized such as soot have a higher possibility to come into contact with the metal oxide particles 2 than a possibility to directly come into contact with the catalytic metal support 1.

Then, as shown in Fig. 1, oxygen-containing substances pass through voids of the metal oxide particles 2, and oxygen is extracted from the oxygen-containing substances at the surface of the catalytic metal support 1 (interface 4 between the catalytic metal support 1 and the metal oxide particles 2) even at a relatively low temperature to generate adsorbed oxygen species (O*). The generated adsorbed oxygen species are stored by the metal oxide particles 2, or completely oxidize the particulate matters to be $CO_2$. Moreover, in another form of oxidation, the adsorbed oxygen species are transported to the surfaces of the particulate matters 3 by the metal oxide particles 2, and a surface oxide may be formed there. Here, it is known that bonding between C and O of the surface oxide can mainly be classified into C=O, C=C and C-O (Applied Catalysis B, 50, 185-194 (2004)). Subsequently, the surface oxide thus formed is oxidized by gas phase oxygen or by the adsorbed oxygen species transported through the metal oxide particles 2. In this way, an oxidized portion is removed from the periphery of the particulate matter 3 and the particulate matter 3 is reduced in size. Finally, the particulate matter 3 is completely oxidized and disappears. Electrons generated at the time of oxidation of the particulate matter are transported to the catalytic metal support 1 through the metal oxide particles 2.

In a device for purification of exhaust gas of the present invention comprising the oxidation catalyst having the above-described constitution, the adsorbed oxygen species are stably supplied by the stored adsorbed oxygen species and transport of those, even when oxygen is insufficient during oxidation at the supply site. Moreover, at the generation site, adsorbed oxygen species are continuously generated as long as oxygen is sufficient. Accordingly, in the device for purification of exhaust gas of the present invention, particulate matters in exhaust gas are efficiently oxidized in a lower temperature range and particulate matters deposited in the device for purification of exhaust gas can be removed at a low temperature. Therefore, the device for purification of exhaust gas can sufficiently be regenerated by a regeneration treatment at a relatively low temperature.

Here, in the present invention, as for the oxygen-containing substances other than $O_2$, it is possible to exemplify compounds containing an oxygen atom such as $NO_x$, $SO_x$, $O_3$, peroxides, superoxides, carbonyl compounds, alcohol compounds, ether compounds and nitro compounds, and the compounds which are gaseous in an atmosphere for oxidizing of particulate matters such as soot.

According to the present invention, it is possible to provide a device for purification of exhaust gas in which: oxygen reactive species particularly preferable for oxidation of particulate matters (PM) are generated; the oxygen reactive species are stably supplied under a condition where an oxidation catalyst is placed; thereby, particulate matters in exhaust gas emitted from an internal-combustion engine can efficiently be oxidized in a lower temperature range; and the device can be regenerated by a relatively low temperature regeneration treatment even when the particulate matters are deposited therein.

**Brief Description of the Drawings**

Fig. 1 is a schematic cross-sectional diagram of the oxidation catalyst according to the present invention.

Fig. 2 is a schematic cross-sectional diagram of an embodiment of the device for purification of exhaust gas not forming part of the present invention.

Fig. 3 is a schematic cross-sectional diagram of another preferable embodiment of the device for purification of exhaust gas of the present invention.

Fig. 4 is a flow chart showing a preferable embodiment of control preformed by the control means of the present invention.

Fig. 5 is a flow chart for another preferable embodiment of the control preformed by the control means of the present invention.

Fig. 6 is a SEM photograph showing a surface state of a $CeO_2$-Ag composition obtained in Example 1.

Fig. 7 is a graph showing a particle diameter distribution (accumulated total) of the $CeO_2$-Ag composition obtained in Example 1.

Fig. 8 is a graph showing a pore diameter distribution of the $CeO_2$-Ag composition obtained in Example 1.

Fig. 9 is a graph showing a pore diameter distribution (accumulated total) of the $CeO_2$-Ag composition obtained in Example 1.

Fig. 10 is a graph showing results of PM oxidation performance test of devices for purification of exhaust gas obtained in Example 1 and Comparative Example 1.

Fig. 11 is a graph showing results of PM oxidation performance test of devices for purification of exhaust gas of the present invention in Examples 1 to 2.

Fig. 12 is a graph showing results of PM oxidation performance test of 2 L-size DPF for comparison and of a device for purification of exhaust gas obtained in Example 3.

Fig. 13 is a graph showing a result of PM oxidation performance test of the device for purification of exhaust gas obtained in Example 1, when a PM deposit amount is set to 1 g/L.

Fig. 14 is a graph showing a result of PM oxidation performance test of the device for purification of exhaust gas obtained in Example 1, when a PM deposit amount is set to 2 g/L.

Fig. 15 is a graph showing a result of PM oxidation performance test of the device for purification of exhaust gas obtained in Example 1, when a PM deposit amount is set to 5 g/L.

Fig. 16 is a graph showing a result of oxidation rate measuring test of the device for purification of exhaust gas of the present invention obtained in Example 1, when a PM deposit amount is set to 2 g/L.

Fig. 17 is a graph showing results of soot oxidation rate measurement of devices for purification of exhaust gas obtained in Example 1, 2 and 4.

Fig. 18 is a graph showing a result of partial pressure change measurement during $^{18}O/^{16}O$ isotope exchange reaction of a sample obtained in Example 1.

Fig. 19 is a graph showing a result of partial pressure change measurement during $^{18}O/^{16}O$ isotope exchange reaction of a sample obtained in Comparative Example 3.

Fig. 20 is a graph showing results of $O_2$ desorption amount measurement at 200°C to 400°C of samples obtained in Example 1 and Comparative Examples 2 to 4.

Fig. 21 is a graph showing a result of ESR measurement.

Fig. 22 is a graph showing results of CO purification ratio measurement of devices for purification of exhaust gas obtained in Examples 1, 5 and 6.

Fig. 23 is a graph showing results of HC purification ratio measurement of the devices for purification of exhaust gas obtained in Example 1, 5 and 6.

Fig. 24 is a graph showing results of PM oxidation performance test of the devices for purification of exhaust gas obtained in Examples 1 and 6.

**Detailed Description of the Preferred Embodiments**

The present invention will be described in detail below based upon preferred embodiments.

First, a device for purification of exhaust gas of the present invention will be described. The device for purification of exhaust gas of the present invention is characterized by comprising an oxidation catalyst an oxidation catalyst including: a particulate catalytic metal support made of a first metal of at least one selected from the group consisting of Ag, Pt, Rh, Pd, Ru, Ir, Os, Au and Cu; and metal oxide particles which are made of an oxide of a second metal having a variable valence, and which have an average primary particle diameter in a range from 1 to 100 nm, which are disposed on the catalytic metal support, wherein the oxidation catalyst is an aggregate, wherein said particulate catalytic metal support constitutes a core ; and said metal oxide particles surround said particulate catalytic metal support, and wherein a molar ratio of the first metal and the second metal ([the first metal] : [the second metal]) is in a range from 10:90 to 80:20.

The first metal constituting the catalytic metal support according to the present invention is preferably an oxygen-reactive-species generating member (an oxygen extracting member) which efficiently generates an oxygen reactive species by extracting oxygen from an oxygen-containing substance. From such a viewpoint, at least one selected from the group consisting of Ag, Pt, Rh, Pd, Ru, Ir, Os, Au and Cu is used, and among these metals, a metal containing Ag is preferable. An alloy containing Ag is further preferable, and Ag is particularly preferable. For the first metal according to the present invention, the above-described metal may be used singly, or an alloy made of two or more metals among the above-described may be used. Moreover, when the first metal according to the present invention contains components other than Ag, the content of Ag is preferably 0.3% by mass or higher. Additionally, an oxide layer of the first metal may be formed on the surface of the catalytic metal support according to the present invention.

The size of the first metal is preferably large to some degree so that a property as metal can be retained in its electron state (for example, not converted into an oxide). When the ionization tendency of a metal is lower, there is a tendency that the property as metal can be retained even if the size of the metal is small. As the first metal retains the property as metal in this manner, there is a tendency that adsorbed oxygen species can be generated more efficiently.

The form of the catalytic metal support according to the present invention is particulate.

The catalytic metal support made of the first metal (for example, Ag) is particulate and the average primary particle diameter is preferably 7 nm or larger, more preferably in a range from 7 to 1000 nm, and particularly preferably in a range from 15 to 500 nm. If the average primary particle diameter of the catalytic metal support falls below the lower limit, there is a tendency that catalytic activity becomes lower. On the other hand, if the average primary particle diameter exceeds the upper limit, a problem tends to occur from the viewpoint of cost reduction. Here, the catalytic metal support may be formed in a manner that multiple particles of the first metal exist while contacting each other.

The second metal constituting the metal oxide particles according to the present invention is preferably an oxygen-reactive-species transporting member which is capable of transporting and/or storing the oxygen reactive species. From such a viewpoint, a metal having a valence variable is used as the second metal. The oxide of such a second metal is preferably at least one selected from the group consisting of oxides of La, Ce, Pr, Nd, Pm, Sm, Eu, Gd, Tb, Dy, Ho, Er, Tm, Yb, Lu, Y, Zr, Fe, Ti, A1, Mg, Co, Ni, Mn, Cr, Mo, W, V, Zn and Sn, solid solutions thereof, and composite oxides thereof. At least one selected from the group consisting of $CeO_2$, $Fe_2O_3$, $ZrO_2$, $Y_2O_3$, $TiO_2$, $Al_2O_3$, MgO, $Co_3O_4$, $Pr_2O_3$, $Nd_2O_3$, ZnO, $SnO_2$, $MnO_2$, $La_2O_3$, $Cr_2O_3$, solid solutions thereof, and composite oxides thereof is more preferable. Above all, $CeO_2$ and a composite oxide containing Ce are particularly preferable. Moreover, the oxide of the second metal having a defect to some degree is preferable in order to transport oxygen reactive species.

When the oxide of the second metal is any of $CeO_2$ and a composite oxide containing Ce, the oxide of the second metal more preferably further includes at least one substance selected from the group consisting of La, Nd, Pr, Sm, Y, Ca, Ti, Fe, Zr, A1, Zn and Sn (particularly preferably La and/or Nd) as an additive metal in order to enhance mobility of oxygen reactive species as well as to prevent enlargement of $CeO_2$ particles or composite oxide particles containing Ce without fail. Here, when such an additive component is contained, the content of the additive component is preferably in a range from 1 to 30 mol%, and more preferably in a range from 5 to 20 mol% relative to the total amount of Ce and the additive component.

The metal oxide particles made of such a second metal oxide need to have an average primary particle diameter in a range from 1 to 400 nm, and more preferably in a range from 1 to 100 nm. If the average primary particle diameter of the metal oxide particles falls below 1 nm, oxygen-containing substances are difficult to pass through voids of the particles, inhibiting generation of reactive oxygen species in the catalytic metal support. On the other hand, if the average primary particle diameter of the metal oxide particles exceeds 400 nm, particulate matters easily pass through the voids of the particles. Accordingly, the metal oxide particles come into contact with the particulate matters in lesser occasion, and supply of reactive oxygen species to the particulate matters is inhibited.

Moreover, the metal oxide particles made of the oxide of the second metal preferably have an average particle diameter in a range from 10 to 100 nm (more preferably in a range from 10 to 50 nm) after calcination for 5 hours at 500°C in air. In addition, the metal oxide particles preferably have an average particle diameter in a range from 10 to 400 nm (more preferably in a range from 10 to 80 nm) after calcination for 5 hours at 800°C in an atmosphere containing oxygen at 10% by volume and nitrogen at 90% by volume. If the average particle diameter of the metal oxide particles falls below the lower limit, there is a tendency that contact with particulate matters such as soot is inhibited. On the other hand, if the average particle diameter exceeds the upper limit, there is a tendency that particulate matters easily pass through voids of the particles. Accordingly, the metal oxide particles come into contact with the particulate matters in lesser occasion, and supply of reactive oxygen species to the particulate matters is inhibited.

As described above, a layer of the second metal oxide particles needs to have a structure in which oxygen-containing substances such as $O_2$ can pass through the voids of the particles and can reach the catalytic metal support. Whether the above-described structure is formed or not can be checked not only with electron microscope observation but also with measurement of an exposed metal amount (oxidation-reduction titration by $O_2$ and $H_2$) for the first metal.

The thickness of the layer of the second metal oxide particles is not particularly limited. However, from the viewpoint of efficient supply of reactive oxygen species to the particulate matter, and from the viewpoint of efficient transport of electrons generated during oxidation of the particulate matter to the catalytic metal support, the thickness is preferably 10 $\mu$m or smaller, more preferably 400 nm or smaller, further more preferably 100 nm or smaller, particularly preferably 30 nm or smaller, and further particularly preferably 10 nm or smaller. On the other hand, if the thickness of the layer of the second metal oxide particles falls below 1 nm, it is not preferable because contact of $O_2$ with the catalytic metal support is inhibited by growth of each particle and because a storage amount of reactive oxygen species becomes smaller.

The device for purification of exhaust gas of the present invention comprises the oxidation catalyst including: the catalytic metal support made of the first metal; and the metal oxide particles made of the oxide of the second metal, the metal oxide particles being disposed on the oxidation catalyst, and particulate matters in exhaust gas being oxidized on the metal oxide particles. Such a oxidation catalyst according to the present invention preferably functions as an oxygen-reactive-species supplying member as described above. Moreover, an oxygen reactive species supplied from the oxidation catalyst according to the present invention is preferably an adsorbed oxygen species as described above, and a molecular adsorbed oxygen species is particularly preferable.

Such an oxidation catalyst may further include third metal ultrafine particles supported on the surfaces of the second metal oxide particles. When the third metal ultrafine particles exist, a larger amount of adsorbed oxygen species are generated by exchanging electric charges among the valence variable metal, the adsorbed oxygen species and the metal ultrafine particles. Accordingly, there is a tendency that supply of the adsorbed oxygen species to a substance to be oxidized is facilitated.

A third metal constituting the third metal ultrafine particles is preferably a metal having a lower ionization tendency than that of H (for example, Au, Pt, Pd, Rh, Ru, Ag, Hg, Cu, Bi, Sb, Ir or Os). One having an ionization tendency equal to or lower than that of Ag (noble metal: for example, Au, Ag, Cu, Pt, Pd, Rh, Ru, Ir or Os) is more preferable, and one that is the same as the first metal is particularly preferable. Moreover, the third metal ultrafine particles are preferably made of 1 to 1000 atoms.

The third metal ultrafine particles are preferably particles which can not be observed even with FE-TEM observation. In the case of Ag, exemplified are particles exist in isolation and detected as $Ag^{2+}$ after electric charges are exchanged between the particles and the valence variable metal.

In addition, the oxidation catalyst according to the present invention may further support a noble metal such as Pt, Rh and Pd by means of a common impregnation method or the like for the further purpose of carrying out oxidation for HC, CO and NO.

[0055] Moreover, the device for purification of exhaust gas of the present invention is not particularly limited as long as comprising the oxidation catalyst. However, a device comprising a substrate and the oxidation catalyst is more preferable.

Such a substrate is not particularly limited, and a DPF substrate, a monolithic substrate, a honeycomb substrate, a pelletized substrate, a platy substrate, and foamed ceramic substrate, and the like are suitably employed. Moreover, a material of such a substrate is not particularly limited. However, a substrate made of ceramic such as cordierite, silicon carbide, or mullite, and a substrate made of metal such as stainless steel containing chromium and aluminum are suitably employed.

Moreover, in the device for purification of exhaust gas of the present invention, the amount of the oxidation catalyst provided to the substrate is not particularly limited. The amount can be appropriately adjusted depending on a targeted internal-combustion engine and the like. However, the amount of the oxidation catalyst is preferably in a range from about 10 to 300 g per liter of substrate volume. Here, in the device for purification of exhaust gas of the present invention, the oxidation catalyst itself can also be, for example, pelletized for use.

Furthermore, in such a device for purification of exhaust gas of the present invention, the substrate preferably has pores ranging from 1 to 300 $\mu$m.

Moreover, such a substrate preferably has a porosity in a range from 30 to 70% (more preferably in a range from 40 to 65%). Here, the term "porosity" refers to a volume ratio of void part in the substrate. If the porosity falls below the lower limit, there are tendencies that the pores are likely to be obstructed by particulate matters in exhaust gas, and that a coated layer of the oxidation catalyst is difficult to form. On the other hand, if the porosity exceeds the upper limit, there are tendencies that particulate matters in exhaust gas are difficult to trap, and that the strength of the substrate becomes lower.

A comparative example of a device for purification of exhaust gas is exemplified as illustrated in Fig. 2. In the device for purification of exhaust gas illustrated in Fig. 2, the film-form catalytic metal support 1 is formed on the surface of a substrate 5 made of ceramic; furthermore, the metal oxide particles 2 are disposed on the surface thereof. Here, reference numeral 4 denotes a metal-metal oxide interface.

A method for forming such a catalytic metal support 1 is not particularly limited. The catalytic metal support 1 can be formed by using a metal plate, plating, paste, vapor deposition methods (for example, a chemical vapor deposition method, a physical vapor deposition method, a sputter vapor deposition method) or the like.

Moreover, a method for forming a layer of the metal oxide particles 2 on the surface of the catalytic metal support 1 is not particularly limited also. The layer can be formed by using a method in which a dispersed fluid or a sol of the metal oxide particles or its precursor is used to coat (thereafter calcined, if necessary), vapor deposition methods (for example, a chemical vapor deposition method, a physical vapor deposition method, a sputter vapor deposition method), or the like.

For example, a device for purification of exhaust gas illustrating in Fig. 2 can be obtained as follows by using a sputtering film forming apparatus to form a thin film made of Ag and $CeO_2$ on a Si substrate having a thickness of 0.35 mm. Specifically, an Ag target material having a purity of 4N and a $CeO_2$ target material having a purity of 3N are disposed in a direction of 70° to a normal line of the substrate, respectively. An Ar gas containing 10% $O_2$ is used as a sputtering gas. The pressure is set to $2.5 \times 10^{-3}$ Torr. The input currents are set to 16 W for the Ag target and 150 W for the $CeO_2$ target. Then, firstly, Ag is vapor-deposited, and subsequently $CeO_2$ is vapor-deposed. Thereby, $CeO_2$ particles can be disposed on the Ag film. Incidentally, desired thicknesses of Ag and $CeO_2$ are easily obtained by controlling the deposition time. For example, the thickness of Ag can be set to 250 nm, and the thickness of $CeO_2$ can be set to 10 nm. In the above-described deposition method, there is a tendency that the layer is formed into a film form. Accordingly, the metal oxide is preferably aggregated by appropriate heating in order to prevent the metal oxide particles layer from being highly densed so as to ensure contact of the interface with gas phase oxygen.

The constitution of the device for purification of exhaust gas of the present invention is exemplified as illustrated in Fig. 3. In the device for purification of exhaust gas illustrated in Fig. 3, aggregates (oxidation catalyst) are disposed on the surface of a substrate 5 made of ceramic, the aggregates including: particulate catalytic metal supports 1 made of the first metal and constituting cores; and metal oxide particles 2 made of the oxide of the second metal and having an average primary particle diameter in a range from 1 to 100 nm, the metal oxide particles surrounding the catalytic metal supports 1. Here, reference numeral 4 denotes a metal-metal oxide interface.

Use of the aggregates as the oxidation catalyst according to the present invention is particularly advantageous because supply sites of adsorbed oxygen species increase as described above. The adsorbed oxygen species can be efficiently generated because of increased area of the metal-metal oxide interface. Furthermore, supply of electric power is no longer necessary. Moreover, the use of the aggregates is advantageous because there is a tendency that the formation of the oxidation catalyst on the ceramic substrate, particularly a DPF having pores ranging from 1 to 300 $\mu$m is facilitated.

Hereinbelow, description will be given of the aggregates effective in the present invention and a manufacturing method therefor.

The particle diameter of the first metal particles in the aggregate according to the present invention is not particularly limited. However, the average particle diameter after calcination for 5 hours at 500°C in air is preferably in a range from 10 to 100 nm (more preferably in a range from 10 to 50 nm); meanwhile, the average particle diameter after calcination for 5 hours at 800°C in an atmosphere containing oxygen at 10% by volume and nitrogen at 90% by volume is preferably in a range from 10 to 400 nm (more preferably in a range from 10 to 80 nm) . If the average particle diameter of the first metal particles falls below the lower limit, there is a tendency that delivery of oxygen reactive species generated by the oxygen-reactive-species generating member to the second metal oxide particles is inhibited. On the other hand, if the average particle diameter exceeds the upper limit, there is a tendency that the first metal particles are difficult to be coated with the second metal oxide particles.

Moreover, in the aggregate, the average particle diameter of the first metal particles is preferably at least 1.3 times, and more preferably 2.0 times, as large as the average particle diameter of the second metal oxide particles, in both cases of after calcination for 5 hours at 500°C in air and after calcination for 5 hours at 800°C in the atmosphere containing oxygen at 10% by volume and nitrogen at 90% by volume. If such conditions are not satisfied, there is a tendency that the first metal particles are not surrounded by the second metal oxide particles sufficiently, decreasing the capability of oxidizing particulate matters.

In the aggregates according to the present invention, the first metal particles are surrounded by the second metal oxide particles. The proportion (molar ratio) of a metal mainly constituting the first metal particles and a metal mainly constituting the second metal oxide particles is in a range from 10:90 to 80:20, preferably in a range from 30:70 to 60:40, and particularly preferably in a range from 35:65 to 60:40. If the amount of the first metal particles falls below the lower limit, there is a tendency that the amount of oxygen reactive species to be extracted from the gas phase is reduced whereby the performance to oxidize a particulate matter is degraded. On the other hand, if the amount of the second metal oxide particles falls below the lower limit, the amount of the oxygen reactive species that can be transported to a particulate matter tend to be reduced whereby the performance to oxidize a particulate matter is degraded. Moreover, when the above-described ratio is in a range from 35:65 to 60:40, it is particularly preferable because the second metal oxide particles can easily surround the first metal particles and proportions of both of the components not forming those aggregates are reduced.

The average particle diameter of such aggregates according to the present invention is not particularly limited, but is preferably in a range from 0.05 to 0.5 $\mu$m and more preferably in a range from 0.07 to 0.2 $\mu$m. If the average particle diameter falls below the lower limit, the contact of an oxygen-containing substance with the first metal particles tends to be inhibited. On the other hand, if the average particle diameter exceeds the upper limit, the contact of the second metal oxide particles and a particulate matter tends to be inhibited.

It is preferable that the aggregates according to the present invention have a high dispersibility and that a portion equal to or larger than 60% by volume of all the aggregates have a particle diameter in a range within ±50% away from the average particle diameter. When the aggregates according to the present invention have such a high dispersibility as described above, the performance to oxidize a particulate matter is further improved and the aggregates are more likely to be supported uniformly on a support such as DPF.

Next, the method for manufacturing an aggregate according to the present invention will be described. Specifically, the method for manufacturing an aggregate according to the present invention includes a method comprising the steps of:

generating an aggregate precursor out of a solution containing a first metal salt and a second metal salt such that a first metal particle derived from the first metal salt are surrounded by second metal compound particulates derived from the second metal salt, and

calcinating the obtained aggregate precursor to obtain an aggregate including: the first metal particle constituting a core; and the second metal oxide particles having an average primary particle diameter in a range from 1 to 100 nm and surrounding the first metal particle.

The first metal salt according to the present invention is a salt of the first metal. Examples of the first metal salt include water-soluble salts such as a nitrate, an acetate, a chloride, a sulfate, a sulfite, and an inorganic complex salt of the first metal. Above all, a nitrate (such as silver nitrate) is used suitably. Moreover, the second metal salt according to the present invention is a salt of the second metal. Examples of the second metal salt include water-soluble salts such as a nitrate, an acetate, a chloride, a sulfate, a sulfite, and an inorganic complex salt of the second metal. Above all, a nitrate (such as cerium nitrate) is used suitably.

Furthermore, a solvent used for preparing the solution containing the first metal salt and the second metal salt is not particularly limited. Examples of the solvent include various solvents such as water, alcohol (for example, a single of methanol, ethanol, ethyleneglycol, or the like, and a mixed solvent thereof), and the like. Water is particularly preferable.

Here, blending amounts (feed amounts) of the first metal salt and the second metal salt do not have to correspond completely to the proportion between the first metal particles and the second metal oxide particles to be obtained. The conditions such as the combination and the blending amounts of the first metal salt and the second metal salt are appropriately set up depending on suitable conditions such as the combination and the proportions of the first metal particles and the second metal oxide particles in a composite material to be obtained. Furthermore, by allowing the first metal salt to exist in an excessive amount relative to the second metal salt, all the second metal oxide particles generated in the solution tend to form part of the aggregates easily. This is preferable because a component other than the aggregates is not generated in the solution.

In such a method of manufacturing an aggregate, it is preferable to generate the aggregate precursor by generating the second metal compound particulates under presence of a pH adjuster and depositing the first metal particles by use of a reducing action of the second metal compound particles in the step of generating the aggregate precursor.

The reason for causing oxidation-reduction reaction can be explained by electric potentials of the first metal and the second metal used. However, the electric potential has a pH dependency. In general, the electric potential becomes lower as the pH becomes higher. Therefore, in the method of manufacturing an aggregate, it is preferable to control the oxidation-reduction reaction by adding the pH adjuster as appropriate. Moreover, activation energy is also changed by adding the pH adjuster. Accordingly, it is possible to control the oxidation-reduction reaction optimally. Exemplified as the pH adjusters are $NaOH$, $KOH$, $NH_3$, $HNO_3$ and $H_2SO_4$. However, it is only necessary to use ordinary acids or alkalis.

When the first metal is Ag, for example, the reaction progresses too fast due to high potential on an acidic side, and thereby a coarse Ag particle tends to be deposited easily. Accordingly, it is preferable to establish alkalinity of the solution under presence of a base. At this point, precipitation is caused if NaOH is used as the pH adjuster. Therefore, it is preferable to establish alkalinity by use of ammonia. In this case, ammonia also functions as a complexing agent which will be described later. The concentration of such a base is not particularly limited. However, when ammonia is used as the base, it is generally preferable to use a solution having the ammonia concentration in a range of about 1 to 50%. Furthermore, the second metal compound particulates in this case are deemed to be a hydroxide of the second metal.

In the method of manufacturing an aggregate, it is more preferable to generate a first metal compound derived from the first metal salt under presence of a complexing agent and to deposit the first metal particle by reducing the first metal compound by way of the reducing action of the second metal compound particulates in the step of generating the aggregate precursor.

To achieve optimum condition of the oxidation-reduction reaction, it is preferable to add the pH adjuster as described above. However, in that case, the metal salt in particular may cause a precipitate depending on the pH. Therefore, even under the condition to cause the precipitate when the complexing agent is not used, it is possible to maintain the state of the metal salt by adding the complexing agent. Since the electric potential or the activation energy is also changed by this operation, it is possible to adjust the condition as appropriate. For example, in the case of the $CeO_2$-Ag based aggregate, it is preferable to use Ag in the form of $[Ag(NH_3)_2]^+$. Examples of the above-described complexing agent include ammonia, alkaline salts of organic acids (such as glycolic acid, citric acid or tartaric acid), thioglycolic acid, hydrazine, triethanolamine, ethylenediamine, glycine, pyridine and cyanides.

Furthermore, in the method of manufacturing an aggregate, it is preferable to regulate temperature in the step of generating the aggregate precursor. The temperature condition of the reaction solution is an important factor for controlling the oxidation-reduction reaction. It is preferable to appropriately regulate the temperature of the solution within a range where the solvent functions in a liquid state. For example, in the case of the $CeO_2$-Ag based aggregate, the temperature is preferably set to 30°C or higher, and more preferably 60°C or higher. As will be described later in Examples, there is a tendency that a reaction can proceed reliably by setting a condition from about 100°C to 150°C at 1 to 3 atm. This condition is also preferable in light of industrial application because reaction time can be shortened as well.

Here, in the step of generating the aggregate precursor, it is possible to apply either a so-called "precipitation method" wherein a pH adjuster-containing solution (such as a basic solution) is added and mixed to a solution of the above-described metal salt or a so-called "reverse precipitation method" wherein the solution of the above-described metal salt is added and mixed to the pH adjuster-containing solution (such as the basic solution). In this case, it is possible to add and mix sequentially in the order of the first metal salt and the second salt or in the reverse order. Although, the reaction time is not particularly limited, it is possible to generate the aggregate preferably over a period of about 0.1 to 24 hours, and more preferably over a period of about 0.1 to 3 hours. Alternatively, in the case of using the complexing agent, it is also possible to carry out the above-described operation after the metal salt is formed by use of the complexing agent in advance.

Moreover, the solid content concentration in the reaction solution in the step of generating the aggregate precursor is not particularly limited. However, the concentration is preferably in a range from 1% by mass to 50% by mass, more preferably in a range from 10% by mass to 40% by mass, and further preferably in a range from 15% by mass to 30% by mass. If the solid content concentration falls below the lower limit, the effect to promote the aggregation process tends to decrease. On the other hand, if the solid content concentration exceeds the upper limit, the aggregate containing the first metal particles as the core tends to be difficult to obtain.

It is possible to efficiently and surely obtain the aggregate precursor in which the first metal particle is surrounded by the second metal compound particulates, by carrying out the aggregation process as described above.

Furthermore, the average particle diameter of the above-described aggregate precursors is not particularly limited, but is preferably in a range from 0.05 to 0.5 $\mu$m, and more preferably in a range from 0.07 to 0.2 $\mu$m. Moreover, it is preferable that the aggregate precursors have a high dispersibility and that a portion equal to or larger than 60% by volume of all the aggregate precursors have a particle diameter in a range within $\pm$50% away from the average particle diameter. When the aggregate precursors have such a high dispersibility as described above, the obtained composite material in the present invention has a high dispersibility whereby the composite material is more likely to be supported uniformly on a support such as DPF.

Furthermore, it is possible to obtain the above-described aggregate by washing as appropriate and then calcinating the aggregate precursors which are obtained by this aggregation process. Although conditions of such a calcinating process are not particularly limited, it is generally preferable to carry out calcinating for about 1 to 5 hours at a temperature from 300°C to 600°C in an oxidation atmosphere (such as air).

Here, the method for manufacturing an aggregate according to the present invention is not limited in the above-descried method. For example, it is possible to obtain the above-described aggregate by adding the first metal particles into a solution containing the second metal salt, and causing the second metal compound particles to be supported on the surface of the first metal particles and then calcinating the resultant. Moreover, it is also possible to obtain the above-described aggregate by vigorously mixing the first metal particles and the second metal oxide particles.

A method for disposing such an aggregate on a substrate is not particularly limited. An example of such a method include a method in which a first aggregate dispersed fluid or a second aggregate dispersed fluid, to be described below, is caused to contact the substrate and then calcinated.

The first aggregate dispersed fluid contains the aggregate and a dispersion medium. It is preferable that such a first aggregate dispersed fluid further contain a binder. The binder used herein is not particularly limited, but ceria sol is used suitably, for example. Moreover, the mixing ratio between the aggregate and the binder is not particularly limited, but it is preferable that the mixing ratio between the aggregate and the binder be in a range from about 99:1 to 80:20 by weight. For example, it is possible to obtain a dispersed fluid (slurry) having a high dispersibility easily by an ultrasonic treatment even in the case of using the binder.

Moreover, the second aggregate dispersed fluid contains the aggregate precursor obtained in the process of the method for manufacturing an aggregate, and a dispersion medium. The second aggregate dispersed fluid preferably contains the aggregate precursor obtained by removing 50 to 99.9% of residual ions in a system from a solution containing the aggregate precursor which is obtained in the process of the method for manufacturing an aggregate. Although there is a certain degree of dispersibility even in the aggregating stage, it is possible to obtain a dispersed fluid having an extremely high dispersibility by removing residual ions attributable to the salt and the complexing agent.

Here, the method of causing the first and second aggregate dispersed fluids to contact the substrate is not particularly limited. However, it is preferable to cause the contact while applying ultrasonic waves when allowing the fluid to penetrate the pores in a filter substrate such as DPF. Additionally, it is preferable that the calcinating condition in this case be similar to the calcinating condition described previously. According to a method in which the second aggregate dispersed fluid is used, since a component that can oxidize a particulate matter is the aggregate itself, the aggregate itself serves as a binder. Therefore, there is a tendency that a more effective device for purification of exhaust gas of the present invention can be provided.

Next, a device for purification of exhaust gas of the present invention comprising control means for performing a low temperature regeneration treatment and a forced regeneration treatment will be described.

Specifically, the device for purification of exhaust gas of the present invention preferably further comprises control means for controlling the device for purification of exhaust gas on the basis of a first criterion (A) of a PM deposit amount, on which a forced regeneration treatment is required, and a second criterion (B) of a PM deposit amount which is a lower criterion than the first criterion (A), and

the control means controlling the device in a way that:

a low temperature regeneration treatment is performed at a second regeneration treatment temperature being lower than a first regeneration treatment temperature for the forced regeneration treatment, when an obtained PM deposit amount is between the first criterion (A) and the second criterion (B), and

the forced regeneration treatment is performed, when an obtained PM deposit amount exceeds the first criterion (A). By the provision of such control means, PM deposited in the device for purification of exhaust gas can be removed efficiently, and the device for purification of exhaust gas can be regenerated and continuously used.

An example of the above-described control means include an engine control unit (ECU). Such an ECU is constituted as a computer in which a microprocessor is combined with peripheral devices such as ROM and RAM required for operating the microprocessor.

Moreover, the above-described first regeneration treatment temperature is preferably a temperature of 600°C or higher (more preferably in a range from 600°C to 650°C). The second regeneration treatment temperature is a lower temperature than the first regeneration treatment temperature, and preferably in a range from 200°C to 500°C, and preferably in a range from about 250°C to 400°C. Furthermore, the term "forced regeneration treatment" refers to a thermal treatment at the first regeneration treatment temperature, and the term "low temperature regeneration treatment" refers to a thermal treatment at the second regeneration treatment temperature. Here, from the viewpoint of suppressing inefficient fuel consumption which occurs during rise of exhaust gas temperature for the purpose of regeneration treatment, it is not preferable that the time of such thermal treatments be unnecessarily long. Therefore, the thermal treatment time is preferably in a range from about 1 to 10 minutes.

Values of the first criterion (A) and the second criterion (B) can appropriately be set depending on size, form, type of base, and the like of the device for purification of exhaust gas. In addition, in the present invention, the first criterion (A) has a higher value than that of the second criterion (B). Moreover, a preferable value for the second criterion (B) is not particularly limited, because the value varies depending on the type of substrate, and the like. However, for example, when a substrate having a porosity of 65% is used, the second criterion (B) is preferably 1.5 g/L or lower per 1 L of the substrate, more preferably 1.0 g/L or lower, and further preferably 0.5 g/L or lower.

A method for measuring the PM deposit amount is not particularly limited. For example, following methods can be employed. Specifically, those that can appropriately be employed as the method for measuring the PM deposit amount are: a method in which a map related to an operation condition of an internal-combustion engine, use record of the device for purification of exhaust gas, and the like, and to a PM deposit amount is created in advance, and then the PM deposit amount is calculated on the basis of the map; a method in which a map related to an exhaust-gas pressure difference between a back position and a front position relative to an aggregates-disposed position, and to a PM deposit amount is created in advance, when the aggregates are disposed in an exhaust gas pipe or the like, and then the PM deposit amount is calculated by measuring the pressure difference on the basis of the map; a method in which the PM deposit amount is calculated by correcting an pressure difference by an intake air amount; a method employing all of these methods; and the like. When such a PM deposit amount is measured, various sensors required for the measurement may appropriately be used.

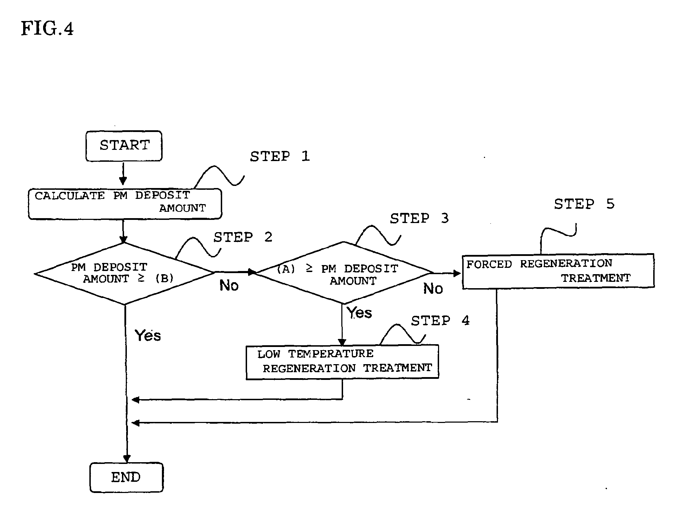

Hereinbelow, a case of using such control means will be described with referring to a flow chart. Fig. 4 is a flow chart showing a preferable embodiment of such control. In Step 1 shown in Fig. 4, a PM deposit amount is calculated at the control unit. In Step 2, whether this PM deposit amount is equal to or exceeds the second criterion (B) or not is determined. If the PM deposit amount is equal to or exceeds the second criterion (B), the process proceeds to Step 3. If the PM deposit amount is below the second criterion (B), the process terminates without any regeneration treatment. In Step 3, whether this PM deposit amount exceeds the first criterion (A) or not is determined. When the PM deposit amount is equal to or below the first criterion (A), that is, when the PM deposit amount is between the first criterion (A) and the second criterion (B), the process proceeds to Step 4 to perform the low temperature regeneration treatment. Meanwhile, when the PM deposit amount is determined to exceed the first criterion (A) in Step 3, the process proceeds to Step 5 to perform the forced regeneration treatment.

Moreover, when the above-described low temperature regeneration treatment and the other are performed, it is more preferable that the second regeneration treatment temperature be set to have a plurality of temperature conditions, and
the device for purification of exhaust gas be controlled in a way that:

a low temperature regeneration treatment is performed at a lower temperature of the second regeneration treatment temperatures, when an obtained PM deposit amount is between the first criterion (A) and the second criterion (B); the low temperature regeneration treatment is terminated, when a subsequent PM deposit amount is below the second criterion (B); and
the low temperature regeneration treatments are repeated while each second regeneration treatment temperature is sequentially changed to a higher temperature, when the PM deposit amount is still between the first criterion (A) and the second criterion (B).

As described above, the device for purification of exhaust gas can be regenerated at a lower temperature without performing the forced regeneration treatment but by performing low temperature regeneration treatments repeatedly. The number of times to perform the forced regeneration treatment can be reduced significantly. Accordingly, the worsening of fuel consumption of an internal-combustion engine during regeneration can be reduced. Furthermore, when a substrate is further provided, meltdown, breakage, or the like of the substrate can sufficiently be suppressed. When the low temperature regeneration treatments are repeated, each second regeneration treatment temperature is sequentially changed to a higher temperature while the PM deposit amount is between the first criterion (A) and the second criterion (B). Nevertheless, the regeneration treatment is preferably terminated at a lower temperature within multiple-set second regeneration treatment temperatures. Note that the multiple temperature conditions set as the second regeneration treatment temperatures are not particularly limited. However, these conditions are preferably within a temperature range from 200°C to 500°C as described above. The optimum temperature for purifying PM can appropriately be set depending on the type of substrate, the property of PM, or the like.

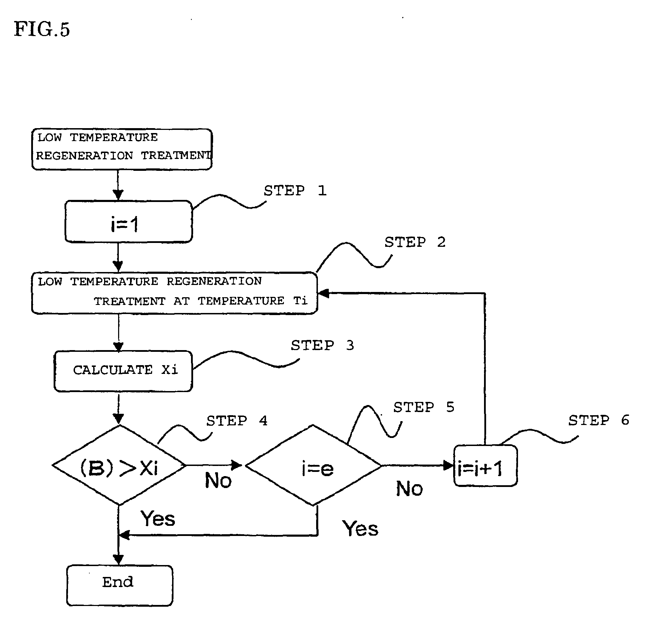

Hereinbelow, a preferable example of a case of controlling so as to repeatedly perform the low temperature regeneration treatment will be described with referring to a flow chart. Fig. 5 is a flow chart showing a preferable embodiment of such control. When such control is performed, first, a PM deposit amount is calculated at a control unit. When the PM deposit amount is between the first criterion (A) and the second criterion (B), the process proceeds to Step 1 shown in Fig. 5. In Step 1 in this case, the number of times i for low temperature regeneration treatments is acknowledged as 1. Then, the process proceeds to Step 2, and the second regeneration treatment temperature is set to $T_i$ (i indicates the number of times for low temperature regeneration treatments. For example, when the stage of the second regeneration treatment temperature is set to 4: $T_1$, $T_2$, $T_3$ and $T_4$, and when i=1, $T_1$ will be employed. Here, these temperatures have a relationship of $T_1 < T_2 < T_3 < T_4$). Subsequently, the temperature is raised to perform the low temperature regeneration treatment. Then, the process proceeds to Step 3 after the low temperature regeneration treatment, and a PM deposit amount $X_i$ (i indicates the number of times for low temperature regeneration treatments) is calculated. Thereafter, in Step 4, whether the PM deposit amount $X_1$ thus calculated is below the second criterion (B) or not is judged. When the $X_i$ is below the second criterion (B), the low temperature regeneration treatment is terminated. Meanwhile, when the PM deposit amount $X_i$ is still equal to or exceeds the second criterion (B), that is, when the $X_i$ is still in between the first criterion (A) and the second criterion (B), the process proceeds to Step 5. In Step 5, it is judged whether or not the number of times i for low temperature regeneration treatments which have been performed until then is equal to a setting number e of temperatures set as the second regeneration treatment temperatures (for example, when the stage of the second regeneration treatment temperature is set to 4: $T_1$, $T_2$, $T_3$ and $T_4$, e=4). When i=e, the low temperature regeneration treatment is terminated. Meanwhile, when the number of times i for low temperature regeneration treatments which have been preformed until then is below the setting number e of second regeneration treatment temperatures (in the case of e>i), the process proceeds to Step 6. In Step 6, the number of times i for low temperature regeneration treatments is acknowledged as i+1, and the process proceeds to Step 2 again. Then, an (i+1)th low temperature regeneration treatment is performed. Here, such an (i+1)th low temperature regeneration treatment is a regeneration treatment in which the temperature is raised to $T_{i+1}$ higher than that of the ith treatment. In the above-described control, Steps 2 to 6 is sequentially repeated until it is determined that the termination condition in Step 4 or Step 5 is satisfied. As a result, the low temperature regeneration treatments are repeated.

In the device for purification of exhaust gas of the present invention further comprising the above-described control means, oxygen reactive species are preferably continuously generated when the low temperature regeneration treatment is performed. Specifically, when the low temperature regeneration treatment is performed, the temperature is preferably set to at least a temperature: "criterion temperature $T_1$", at which the oxygen reactive species can satisfactorily be supplied. In order to supply the oxygen reactive species efficiently to PM by generating and transporting the oxygen reactive species as described above, the temperature is preferably raised to a specific temperature or higher (for example, 250°C or higher in a case of CeAg-La10 system to be described below). For this reason, when the PM deposit amount exceeds a criterion value, firstly, the temperature is preferably set to at least the "criterion temperature $T_1$", in order to satisfactorily supply oxygen reactive species to PM.

Moreover, in the device for purification of exhaust gas of the present invention further comprising the above-described control means, oxygen reactive species are preferably stored by the metal oxide particles disposed on the catalytic metal support after the forced regeneration treatment is performed. Specifically, it is preferable that the oxygen reactive species be generated and stored, after the temperature is further raised to a high temperature, if necessary, to perform the forced regeneration treatment for a later low temperature regeneration treatment. Here, the raising to a higher temperature leads to the worsening of fuel consumption. Accordingly, this temperature raising is preferably carried out together with the above-described control of temperature raising for the purpose of satisfactory supplying of the oxygen reactive species. At this point, it is preferable to remove the deposited PM as completely as possible, because generated oxygen reactive species are not immediately used for PM oxidation, and a large amount of the oxygen reactive species are stored.

Moreover, in the device for purification of exhaust gas of the present invention, a catalyst for NOx purification may be further disposed at a back position or front position relative to the aggregate-disposed position. By disposing the catalyst for NOx purification the at the back position, exhaust gas from which PM are sufficiently removed by the aggregate during exhaust gas purification comes into contact with the catalyst for NOx purification. Accordingly, poisoning deterioration of the catalyst for NOx purification due to the PM is sufficiently suppressed.

Moreover, from the viewpoint of NOx purification, the catalyst for NOx purification may be disposed at the front position in order to maintain a temperature at which NOx reduction is allowed. In this case also, PM can be purified sufficiently; accordingly, both PM and NOx can be purified.

Note that the above-described device for purification of exhaust gas of the present invention can sufficiently purify exhaust gas containing PM by making contact with exhaust gas emitted from an internal-combustion engine. Such a device for purification of exhaust gas can use oxygen in the gas phase as an oxidant. Moreover, PM can sufficiently be oxidized at a lower temperature range. Even when PM are deposited, the device for purification of exhaust gas can sufficiently be regenerated by a regeneration treatment at a relatively low temperature. Furthermore, when further comprising the control means, the device for purification of exhaust gas of the present invention can be used for a long period while preventing the deterioration of a catalytic activity.

Examples

The present invention will be described below more concretely based on Examples and Comparative Examples. However, the present invention will not be limited to the following Examples.

Here, cerium nitrate hexahydrate as a Ce raw material, silver nitrate as an Ag raw material and lanthanum nitrate hexahydrate as a La raw material were used, respectively.

Note that obtained aggregates were expressed by use of molar percentage of Ag relative to (Ce+Ag) at the stage of preparing nitrate solutions. For example, an aggregate obtained by preparing a nitrate solution so as to render Ag equal to 60 mol% was expressed as "$CeO_2$-Ag60" (or "Ce-Ag60"). Meanwhile, obtained aggregates were expressed by use of molar percentage of an added component relative to the total amount of the added component and Ce at the stage of preparing nitrate solutions. For example, an aggregate obtained by preparing in a feed ratio of Ce:Ag=40:60, Ce:La=90:10 (Ce:Ag:La=90:135:10) was expressed as "CeAg-La10".

(Example 1)

A nitrate solution containing Ce, Ag and an additive component (La) was prepared in a manner that the content (mol%) of the additive component (La) relative to the total amount of Ce and the additive component was 10 mol%. Thereby, a DPF coated with a $CeO_2$-Ag-La aggregate "CeAg-La10" (oxidation catalyst) was obtained as follows. Specifically, first, a solution was prepared by dissolving 50. 46 g of Ce $(NO_3)_3 \cdot 6H_2O$, 5.59 g of La $(NO_3)_3 \cdot 6H_2O$ and 29.62 g of $AgNO_3$ into 120 mL of water. Next, ammonia water was prepared by diluting 38.21 g of 25% ammonia water with 100 g of water. Then, the solution prepared as described above was poured into the above-described ammonia water while the ammonia water was being stirred (inverse precipitation). The stirring was continued for 10 minutes and then an aggregation process was conducted under presence of water in a closed system for 2 hours while heating up to 120°C at a pressure of 2 atm to prepare the aggregates.

Subsequently, the obtained aggregates were coated on a test piece size (35 ml) DPF (made of cordierite, porosity 65%, average pore diameter 30 $\mu$m) in accordance with a coating method described below to obtain a device for purification of exhaust gas of the present invention. Specifically, the precipitates (aggregates) after the inverse precipitation and the aggregation process were collected by centrifugation. A slurry having a concentration of 15% by mass was obtained by adding water to the precipitation. Subsequently, the slurry was allowed to contact the DPF so as to enter pores thereof. After suctioning in this state, the DPF was subjected to calcinating for 1 hour at 500°C in air. The process was repeated until a support amount (coverage) reached 150 g/L. An advantage of this method is that the precipitation itself is sintered at the time of calcinating and thereby functions as a binder. Accordingly, it is possible to form coating that consists of only the components effective for soot oxidation. Moreover, upon measurement of the particle diameter distribution of the above-described slurry, the aggregates of approximately 0.1 $\mu$m were stably dispersed, and it was confirmed that it is easy to coat the DPF. Here, the contact was made in the above-described coating method without application of ultrasonic waves, however, it is also possible to perform this process while applying ultrasonic waves.

(Example 2)

An endurance test was conducted on a device for purification of exhaust gas obtained similarly to Example 1. In the endurance test, the device was calcinated for 5 hours at 800°C in an atmosphere containing oxygen at 10% by volume and nitrogen at 90% by volume. Thereby, a device for purification of exhaust gas of the present invention after the endurance test ("CeAg-La10, 800 °C endurance or 800°C aged) was obtained.

(Example 3)

A device for purification of exhaust gas of the present invention was obtained similarly to Example 1 except that 2L-size DPF (made of cordierite, porosity 65%, average pore diameter 30 $\mu$m) was used (coverage: 150 g/L) .

(Example 4)

Aggregates were prepared by employing the same method as the manufacturing method for an aggregate employed in Example 1 except that a nitrate solution containing Ce and Ag was prepared in a manner that the content (mol%) of Ag relative to the total amount of Ce and Ag was 60 mol% without using La(NO$_3$)$_3$ when the aggregates were obtained. The obtained aggregates were calcinated for 5 hours at 500°C in air to obtain a CeO$_2$-Ag aggregate "CeO$_2$-Ag60" (oxidation catalyst).

<Evaluation of Ag content>

The Ag content in the obtained CeO$_2$-Ag60 was analyzed in accordance with the ICP emission spectrometry. The content was 50.2 mol%.

<Evaluation of CeO$_2$ particle diameter and Ag particle diameter>

The particle diameter (average primary particle diameter) of CeO$_2$ and the particle diameter (average primary particle diameter) of Ag in the obtained CeO$_2$-Ag60 were found by use of XRD. As a result, the particle diameter of CeO$_2$ was 11 nm, and the particle diameter of Ag was 29 nm.
Moreover, the same measurement was conducted for the CeO$_2$-Ag60 having been subjected to calcinating for 5 hours at 800°C in an atmosphere containing oxygen at 10% by volume and nitrogen at 90% by volume. As a result, the particle diameter of CeO$_2$ was 41 nm, and the particle diameter of Ag was 52 nm.

<SEM observation>

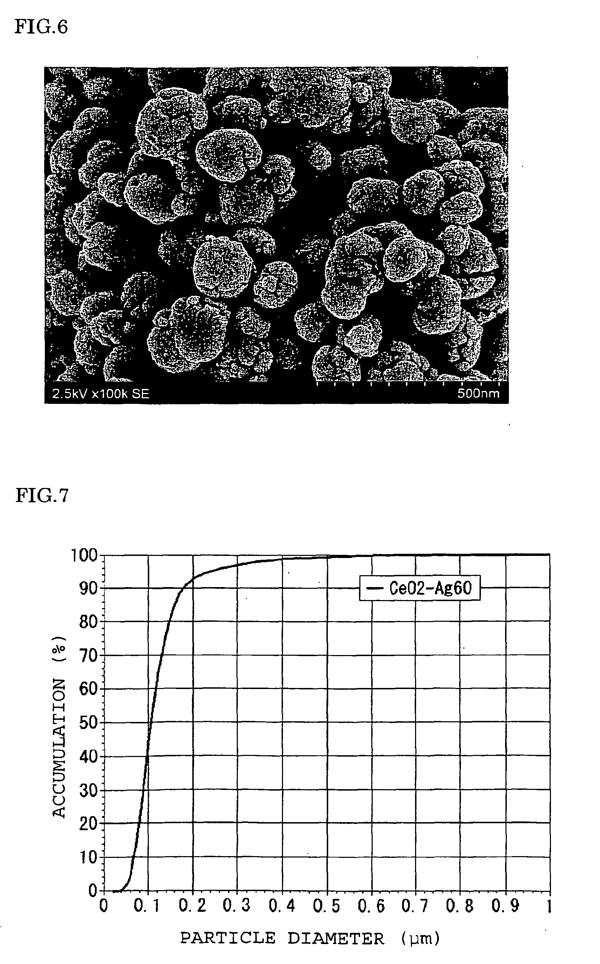

A surface state of the obtained CeO$_2$-Ag60 was observed with a SEM (scanning electron microscope). The obtained result is shown in Fig. 6. Considering the result shown in Fig. 6, the particle diameters found by use of XRD, and an observation made by TEM that the CeO$_2$ was in the form of aggregate, it was confirmed that the aggregate observed in the order of about 100 nm was made of primary aggregates of CeO$_2$ particles and Ag particles, and these primary aggregates were aggregated secondarily to form an assembly (high-order aggregate).

<Measurement of particle diameter distribution>

The particle diameter distribution of the obtained CeO$_2$-Ag60 was measured by use of a laser diffraction/ scattering particle size distribution analyzer (MT3300EX, made by Nikkiso Co. Ltd.). The obtained measurement result of the particle diameter distribution is shown in Fig. 7 with the longitudinal axis as the accumulated total (% by volume). As apparent from the result shown in Fig. 7, the average particle diameter of the aggregates in the obtained CeO$_2$-Ag60 was around 0.1 $\mu$m, and it was confirmed that about 80% of the particles fell in a range from 0.05 to 0.15 $\mu$m that represents the range 0.1 $\mu$m $\pm$ 50%.

<Evaluation of pore volume and pore diameter distribution>

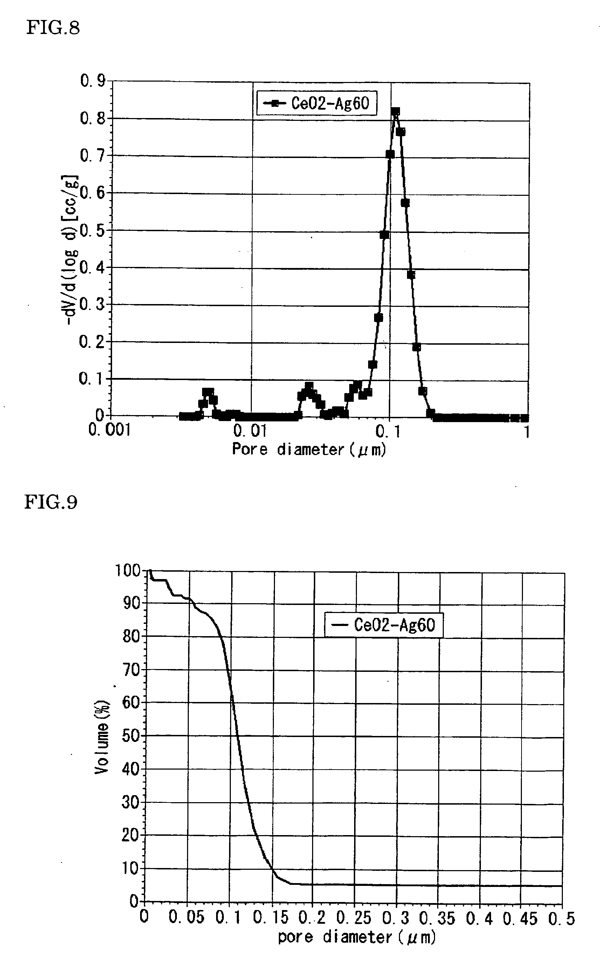

The pore volume and pore diameter distribution in the obtained $CeO_2$-Ag60 were measured by use of a mercury porosimeter. The obtained result is shown in Fig. 8 and Fig. 9 (Fig. 9 represents cumulative volume distribution). As a result, the volume of the total pores was 0.21 cc/g, and the volume of pores having a pore diameter in a range from 0.01 to 1.0 $\mu$m was 0.19 cc/g.

Moreover, the range of a void pore formed by the aggregate was in a range from 0.06 to 0.18 $\mu$m, and the average void pore diameter was 0.1 $\mu$m. Accordingly, from the result shown in Fig. 9, it was confirmed that the volume of the void pores having a pore diameter in a range from 0.05 to 0.15 $\mu$m which was within $\pm$ 50% of the average void pore diameter occupied 80% of the total' volume of the void pores. Furthermore, it was also confirmed that the volume of the pores having a pore diameter in a range from 0.05 to 0.5 $\mu$m occupied 85 % of the volume of total pores.

(Example 5)

A Pt-supporting $CeO_2$-Ag-La substrate "CeLaAg-Pt0.5" was obtained by supporting Pt to a CeAg-La10-coated DPF obtained in Example 1 with an impregnation method using a dinitrodiamine platinum aqueous solution in a manner that the supporting amount was 0.5 g/L.

(Example 6)

A Pt-supporting $CeO_2$-Ag-La substrate "CeLaAg-Pt2" was obtained by supporting Pt to a CeAg-La10-coated DPF obtained in Example 1 with the impregnation method using a dinitrodiamine platinum aqueous solution in a manner that the supporting amount was 2.0 g/L.

(Comparative Example 1)

First, a DPF (made of cordierite, porosity 65%, average pore diameter 30 $\mu$m, 14.38 cm (diameter) $\times$15.24 cm (length)) was impregnated with a solution made by mixing 125 g of $Ce(NO_3)_3 \cdot 6H_2O$, 18 g of $ZrO(NO_3)_2$, 6.4 g of $Sm(NO_3)_3 \cdot 6H_2O$, 2.1 g of $Y(NO_3)_3 \cdot 6H_2O$ and 38.4 g of citric acid with 325 ml of distilled water. The obtained DPF was dried at 105°C, and then calcinated for 4 hours at 600°C.

Subsequently, the substrate was impregnated with a solution made by mixing 68.5 g of $AgNO_3$, 155 g of $Ce(NO_3)_3 \cdot 6H_2O$, 8.5 g of $ZrO(NO_3)_2$, 12.8 g of $Sm(NO_3)_3 \cdot 6H_2O$ and 3.0 g of $Y(NO_3)_3 \cdot 6H_2O$ with 325 ml of distilled water. The obtained substrate was dried at room temperature overnight, further dried for 10 hours at 105°C, and then calcinated for 4 hours at 600°C.

Thereafter, the DPF set at 105°C was impregnated with a solution made by mixing 69.6 g of $Ce(NO_3)_3 \cdot 6H_2O$, 5.4 g of $Cu(NO_3)_2 \cdot 3H_2O$, 0.51 g of $AgNO_3$ and 9 g of urea with 100 ml of distilled water. The obtained DPF was dried at 80°C, and then further calcinated for 4 hours at 650°C to produce a device for purification of exhaust gas for comparison. Here, the composition of a catalyst layer on the substrate surface in the device for purification of exhaust gas was $Ag_{0.5}Ce_{0.5}$ having stabilized ceria by addition of Sm, Zr and Y.

(Comparative Example 2)

$CeO_2$ powders "$CeO_2$" were obtained by employing the same method as the manufacturing method for an aggregate employed in Example 4 except that a nitrate solution containing only Ce as a metal component was prepared without using Ag.

(Comparative Example 3)

Pt-supporting $CeO_2$ powders "$Pt/CeO_2$" for comparison was obtained by: supporting Pt to $CeO_2$ powders obtained in Comparative Example 2 with the impregnation method using a dinitrodiamine platinum aqueous solution in a manner that the supporting amount was 3.2 wt%; and calcinating the obtained $CeO_2$ powders at 500°C.

(Comparative Example 4)

Ag-supporting $Al_2O_3$ powders "$Ag/Al_2O_3$" for comparison was obtained by: supporting Ag to commercially available $\alpha$-$Al_2O_3$ powders (made by Showa Denko K.K., Trade name UA-5205) with an impregnation method using a silver nitrate aqueous solution in a manner that the supporting amount (Ag/(Ag+Al)) was 50 mol%; and calcinating the obtained $Al_2O_3$ powders at 500°C.

(Comparative Example 5)

A DPF coated with Pt-supporting $CeO_2$ "Pt/$CeO_2$" for comparison was obtained by: coating a DPF used in Example 1 with ceria with an impregnation method using a ceria sol (made by Taki Chemical Co., Ltd. , Needral U-15) in a manner that the supporting amount (coverage) was 30 g/L; then supporting Pt to the obtained DPF with the impregnation method using a dinitrodiamine platinum aqueous solution in a manner that the supporting amount was 0.5 g/L; and calcinating the resultant DPF at 500°C.

<PM oxidation performance evaluation test 1>

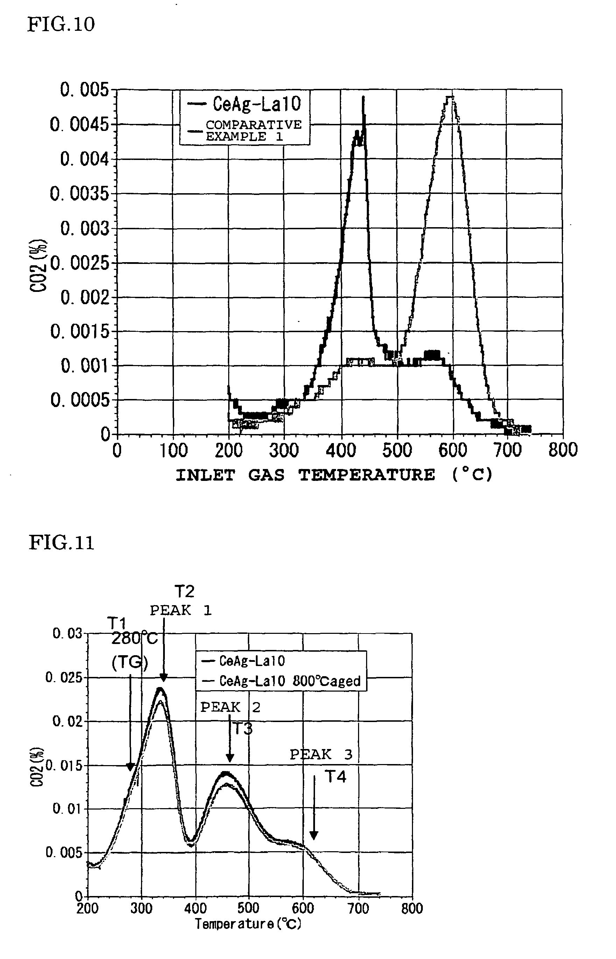

The devices for purification of exhaust gas obtained in Example 1 and Comparative Example 1 were used. About 2 g/L of PM were deposited therein at 200°C in exhaust gas of a diesel engine. Next, unburned hydrocarbon components were removed by maintaining $N_2$ atmosphere for 15 minutes at 500°C. Then, the temperature was raised at a temperature rising rate of 20°C/min in the atmosphere containing oxygen at 10% at a flow rate of 30 L/min. Then, the PM oxidation performances were compared with the $CO_2$ peaks at this time. The obtained result is shown in Fig. 10. Here, the process for PM deposition was conducted simultaneously in order to have identical deposited PM states.
As apparent from a graph shown in Fig. 10, the $CO_2$ peak in the device for purification of exhaust gas of the present invention was located around 440 °C. On the other hand, the $CO_2$ peak in the device for purification of exhaust gas for comparison was located around 600°C. Accordingly, it was confirmed that the device for purification of exhaust gas of the present invention is capable of sufficiently oxidizing PM at a relatively low temperature for removal.

<PM oxidation performance evaluation test 2>

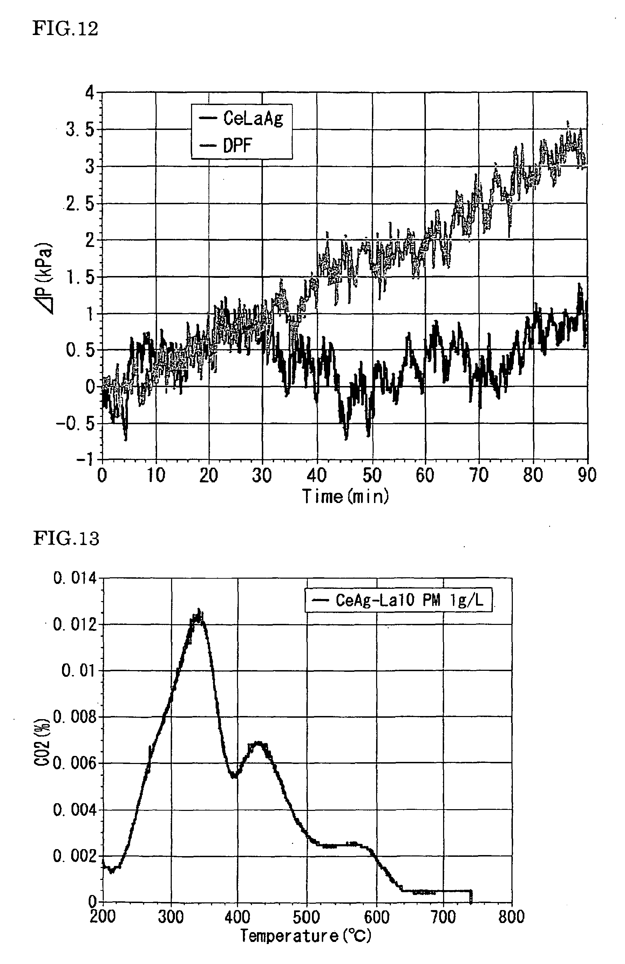

PM were deposited by employing the same method as that in the PM oxidation performance evaluation test 1 except that the devices for purification of exhaust gas of the present invention obtained in Examples 1 and 2 were used. And then, the PM oxidation performances were measured with the $CO_2$ peaks. The obtained result is shown in Fig. 10.
As apparent from the result shown in Fig. 11, firstly, it was confirmed that three peaks were found in the device for purification of exhaust gas of the present invention obtained in Example 1. It is speculated that such peaks were caused by dry soot trapped in the wall, hard-to-burn soot trapped in the wall, and soot deposited on the outside of the wall, respectively. Moreover, the non-aged device (Example 1) and the device after the endurance test (Example 2) showed similar peaks. Accordingly, it was found that the device for purification of exhaust gas of the present invention has a high durability.
As described above, in the device for purification of exhaust gas of the present invention obtained in Example 1, the three $CO_2$ peaks were found during PM oxidation. Accordingly, it was confirmed that the device can efficiently be regenerated by conducting the low temperature regeneration treatment as described above while each of the peak temperatures (T2 to T4) as well as a temperature TG (T1), at which an oxidation performance was observed in a measurement test of a soot oxidation rate (refer to Fig. 12) to be described below, were set as the aforementioned second regeneration treatment temperature.

<PM oxidation performance evaluation test 3>

Using the device for purification of exhaust gas obtained in Example 3 and a 2L-size DPF (made of cordierite, porosity 65%, average pore diameter 30 $\mu$m) for comparison, the PM oxidation performances were evaluated in a manner that each of them was disposed in a pipe extended from an engine to measure a pressure fluctuation. Here, a 2L diesel engine was used as the engine, and the pressure at the substrate inlet was measured under driving conditions of 3000 rpm and 11.0 kgm. The exhaust gas temperature at the substrate inlet was about 360°C. When the driving conditions were stabilized, the fluctuation of pressure difference over time from a certain time point was measured. The obtained result is shown in Fig. 12.
As apparent from the result shown in Fig. 12, the pressure was monotonously increased over time when only the DPF substrate was used, since PM were not oxidized. On the other hand, although some pressure fluctuation was observed, the device for purification of exhaust gas of the present invention showed almost constant pressure over time. From this result, it was confirmed that the device for purification of exhaust gas of the present invention is capable of continuously oxidizing PM. Moreover, it is deemed from such a result that there is a proportional relation between the PM deposit amount and the pressure. Accordingly, it was found that, as a method for measuring a PM deposit amount, when the above-described control means is employed, a PM-deposit-amount measuring method by measuring a pressure fluctuation can be suitably employed.

<PM oxidation performance evaluation test 4>

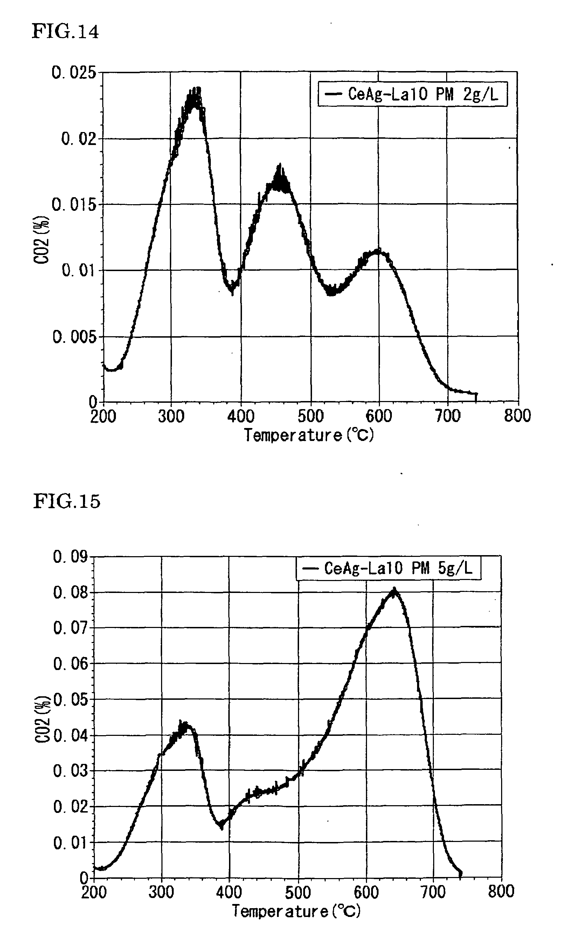

Three devices for purification of exhaust gas obtained in Example 1 were used. PM were deposited in each of the devices at 200 °C in exhaust gas of a diesel engine. Next, unburned hydrocarbon components were removed by maintaining $N_2$ atmosphere for 15 minutes at 500°C. Then, the temperature was raised at a temperature rising rate of 20°C/min in the atmosphere containing oxygen at 10% at a flow rate of 30 L/min. Here, the PM deposit amounts in the devices for purification of exhaust gas were 1 g/L, 2 g/L and 5 g/L, respectively. Then, the PM oxidation performances were compared with the $CO_2$ peaks at this time. The obtained results are shown in Fig. 13 (PM deposit amount: 1 g/L), Fig. 14 (PM deposit amount: 2 g/L) and Fig. 15 (PM deposit amount: 5 g/L). Here, the processes for PM deposition were conducted simultaneously in order to have identical deposited PM states.

As apparent from the results shown in Figs. 13 to 15, in the device for purification of exhaust gas of the present invention (Example 1), it was confirmed that a low temperature regeneration treatment is preferably performed when the PM deposit amount is smaller in order to perform the regeneration treatment at a lower temperature. It was found out that a low temperature regeneration treatment is preferably performed when the PM deposit amount is 1 g/L or smaller, for example.

<Measurement test for PM oxidation rate>

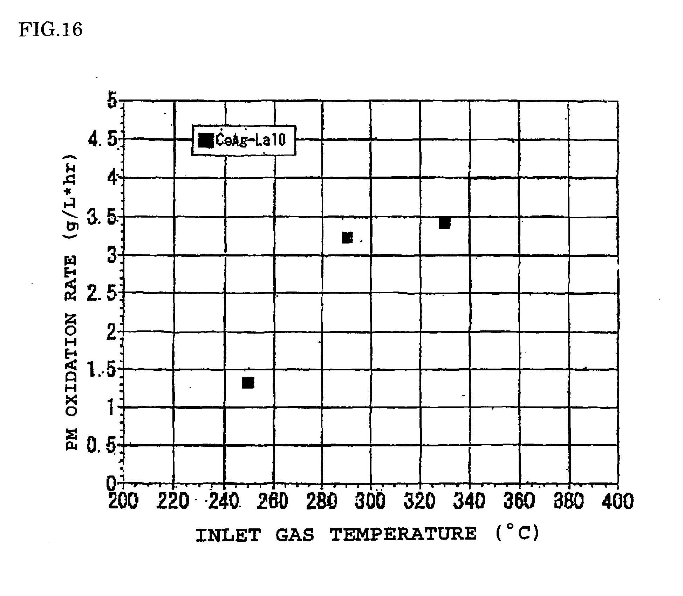

The device for purification of exhaust gas of the present invention obtained in Example 1 was used. 2 g/L of PM were deposited therein at 200°C in exhaust gas of a diesel engine. Next, unburned hydrocarbon components were removed by maintaining $N_2$ atmosphere for 15 minutes at 500°C. Then, the temperature was maintained at certain values for 10 min in the atmosphere containing oxygen at 10% at a flow rate of 30 L/min. The PM oxidation rate was determined from the measured $CO_2$ concentration. The obtained result is shown in Fig. 16.

As apparent from the result shown in Fig. 16, it was confirmed that PM can sufficiently be oxidized at about 300°C.

<Measurement test for soot oxidation rate>

First, measurement samples were prepared by using: aggregates which were obtained in Example 1 to 2 before coating DPFs, and which were calcinated for 5 hours at 500°C in air; and aggregates obtained in Example 4, and mixing these aggregates with soot (carbon composition 99.9% or above) in accordance with the following mixing method. Here, the mixing ratio between each of the aggregates and the soot was 2:0.1 by weight ratio (g). An endurance test was conducted to the aggregates produced in Example 2 by employing the same method as the method employed in Example 2.

Mixing method: Uniform mixtures (the measurement samples) were obtained by using a stirrer (MMPS-M1, made by AS ONE Corporation) and a magnet mortar (MP-02, made by AS ONE Corporation) and mixing for 3 minutes by electric mixing while setting a speed scale to "3".

Next, the temperatures of the obtained measurement samples (Examples 1 to 2 and 4) were maintained for 10 minutes at each measurement temperature in an $O_2$-10%/He-balanced atmosphere using the thermogravimetric analyzer "GC-MS5972A" (made by Hewlett Packard Company). A weight $M_1$ at that time and a total soot weight $M_2$ were used to calculate the soot oxidation rates. Here, in the calculation method, the soot weight $M_2$ was calculated based on a weight at the time when the temperature was finally raised up to 800°C after the first measurement of the weight $M_1$, and the soot oxidation rate was calculated from a measurement time t (1/6 hours in this case) according to the following formula:

$$\texttt{Soot oxidation rate=}(M_1-M_2)/\{(M_1+M_2)\times t/2\}.$$

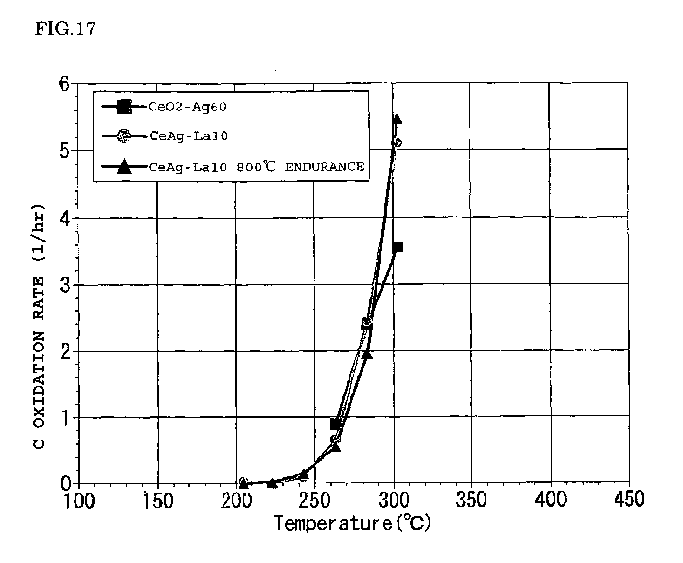

The obtained result is shown in Fig. 17.

As apparent from the result shown in Figs. 17, soot oxidation activity was seen around 240°C in any aggregate. Moreover, it was observed that both the non-aged aggregate (Example 1) and the aggregate after the endurance test (Example 2) had remarkably high soot oxidation activity.

<Verification test for generation of oxygen reactive species at low temperature: isotope exchange reaction test>

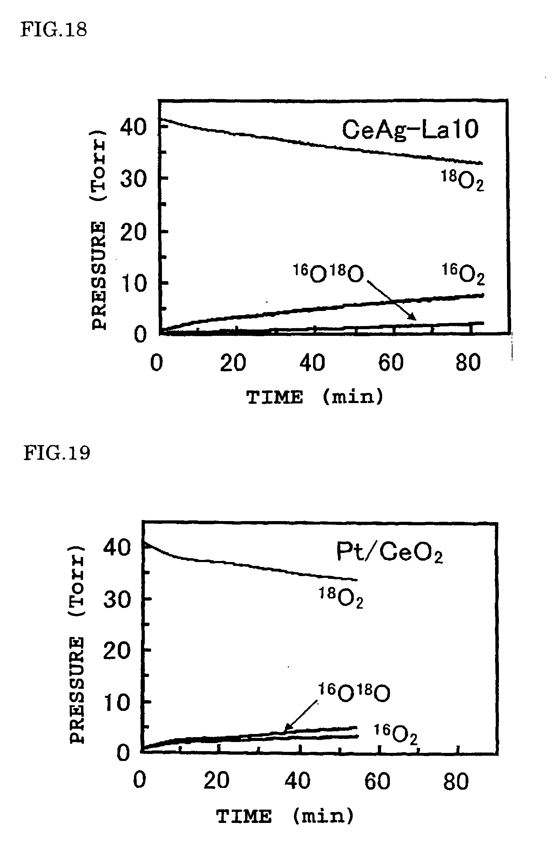

Partial pressure change in $^{18}O/^{16}O$ isotope exchange reaction was measured as follows, by using: aggregates (CeAg-La10) which were obtained in Example 1 before coating to a DPF, and which were calcinated for 5 hours at 500°C in air; and Pt-supporting $CeO_2$ powders "Pt/$CeO_2$" obtained in Comparative Example 3. Specifically, after held in an

atmosphere of $^{16}O_2$ for 30 min at 450°C, each sample was degassed under vacuum for 10 min at 450°C. Next, $^{18}O_2$ at 42.4 Torr was introduced thereto at 300°C. Then, the partial pressure change in the $^{18}O/^{16}O$ isotope exchange reaction was measured. The obtained results are shown in Fig. 18 (Example 1) and Fig. 19 (Comparative Example 3).

The present inventors speculated that, in the case of the sample obtained in Comparative Example 3, the dissociation and the adsorption were occured because the soot was hardly oxidized at 300 °C but more $^{16}O^{18}O$ was generated in the isotope exchange reaction.

On the other hand, it was observed that, in the case of the sample obtained in Example 1, adsorbed oxygen species were aggressively generated, which also resulted in the facilitation of soot oxidation because more $^{16}O_2$ was generated than $^{16}O^{18}O$. Moreover, the present inventors speculated that more molecular adsorbed oxygen species were probably generated because more $^{16}O_2$ was generated. Furthermore, it was observed that not only gas phase oxygen but also lattice oxygen was effectively used. Therefore, the present inventors speculated that, in the device for purification of exhaust gas of the present invention, gas phase oxygen is not simply adsorbed and desorbed, but oxygen reactive species are efficiently generated by charge transfer of Ce, Ag and $O_2$ at the interface between $CeO_2$ and Ag.

Therefore, according to this isotope exchange reaction test, it was verified that the above-described regeneration treatment temperature T1 is a temperature at which the oxygen reactive species can be well-supplied.

<Confirmation test for generation and storage of oxygen reactive species by temperature raising up to high temperature: TPD test>

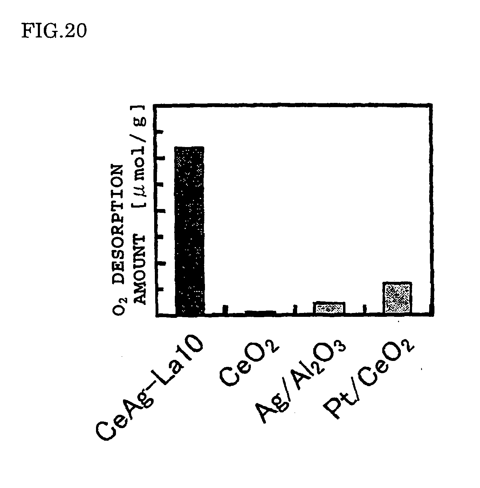

The desorption amount of $O_2$ from $O_2$ - TPD in the range of 200°C to 400°C was measured as follows by using: aggregates (CeAg-La10) which were obtained in Example 1 before coating to a DPF, and which were calcinated for 5 hours at 500°C in air; $CeO_2$ powders "$CeO_2$" obtained in Comparative Example 2; Pt-supporting $CeO_2$ powders "$Pt/CeO_2$" obtained in Comparative Example 3; and Ag-supporting $Al_2O_3$ powders "$Ag/Al_2O_3$" of obtained in Comparative Example 4. Specifically, after held in $O_2$ flow for 30 min at 600°C, each sample was cooled to room temperature. Then, the temperature was raised at 20°C/min in He flow, and the desorption amount of $O_2$ in the range from 200°C to 400°C was measured. The obtained result is shown in Fig. 20.

Moreover, in the same way as described above, the desorption amount of $O_2$ from $O_2$ - TPD in the range of 200°C to 400 °C was measured by using: a DPF coated with CeAg-La10 obtained in Example 1; and a DPF coated with $Pt/CeO_2$ obtained in Comparative Example 5. As a result, the desorption amount of $O_2$ from the DPF obtained in Example 1 was 31 $\mu$mol/g, whereas the desorption amount of $O_2$ from the DPF obtained in comparative Example 5 was 2.4 $\mu$mol/g.

Here, no oxygen desorption peak was observed in any sample obtained in Comparative Examples, whereas it was observed that adsorbed oxygen species were generated and stored in the sample obtained in Example 1. Accordingly, it was confirmed in the device for purification of exhaust gas of the present invention that oxygen reactive species are generated by raising the temperature up to a high temperature is stored and can be used for oxidation of particulate matters at a low temperature. Note that, the desorption amount of $O_2$ has remarkably good correlation with activity at TG.

<Identification test of oxygen reactive species: ESR test>

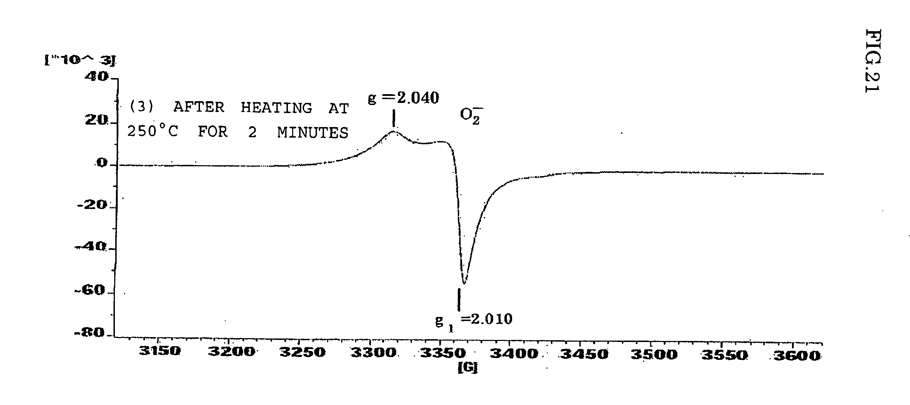

The ESR measurement was performed as follows by using aggregates (CeAg-La10) obtained in Example 1. Specifically, after held in $O_2$ flow for 30 min at 600°C, the sample was cooled to room temperature in He flow. Then, the sample was subjected to $H_2$ treatment at 250°C, and thereafter sealed at 250 °C to perform ESR measurement at 20K. The obtained result is shown in Fig. 21.

Since $O_2^-$ signal proportional to the desorption amount by the TPD test shown in Fig. 20 was observed, it was confirmed that the adsorbed oxygen species generated in the device for purification of exhaust gas of the present invention has a property that a part of the adsorbed oxygen species is converted into $O_2^-$ by reduction treatment.

Thus, by the above-descried TPD test and ESR test, it was verified that the aforementioned regeneration treatment temperatures T2 to T4 are (i) temperatures at which oxygen reactive species can be supplied more strongly in consideration of contact ability, and (ii) temperatures at which oxygen reactive species are generated for continuous oxidization at a low temperature. From this, it was confirmed that carrying out the control as in the flow charts shown in Fig. 4 and Fig. 5 is effective in order to achieve both PM purification and fuel consumption improvement with efficiently supplying the oxygen reactive species as described above.

<CO and HC purification evaluation test>

The CO and HC purification rates were measured as follows by using: a substrate coated with $CeO_2$-Ag-La aggregates "CeLaAg" obtained in Example 1; a Pt-supporting $CeO_2$-Ag-La substrate "CeLaAg-Pt0.5" obtained in Example 5; and a Pt-supporting $CeO_2$-Ag-La substrate "CeLaAg-Pt2" obtained in Example 6. Specifically, the CO and HC concentrations (volume%) were measured in the following atmosphere and temperature rising condition:

Atmosphere: $O_2(10\%)+CO(1\%)+C_3H_6(1\% C)+CO_2(10\%)+H_2O(10\%)$
Temperature rising condition: 100 to 400°C, 10°C/min, 30 L/min

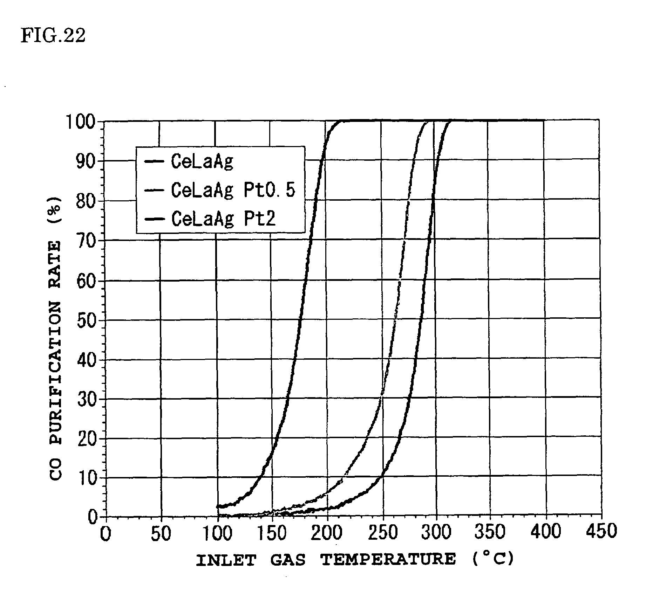

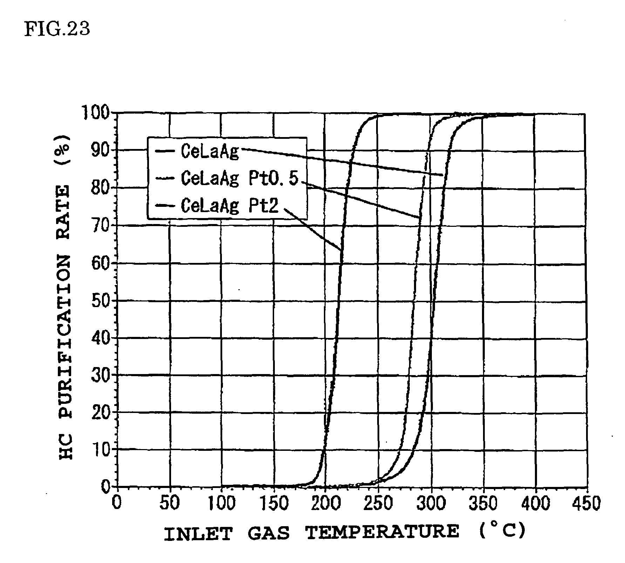

to measure the purification rates thereof. The results are shown in Fig. 22 (CO purification rate) and Fig. 23 (HC purification rate).

From these results, it was confirmed that purification temperature for HC and CO was reduced by further supporting Pt.

<PM oxidation performance evaluation test 5>

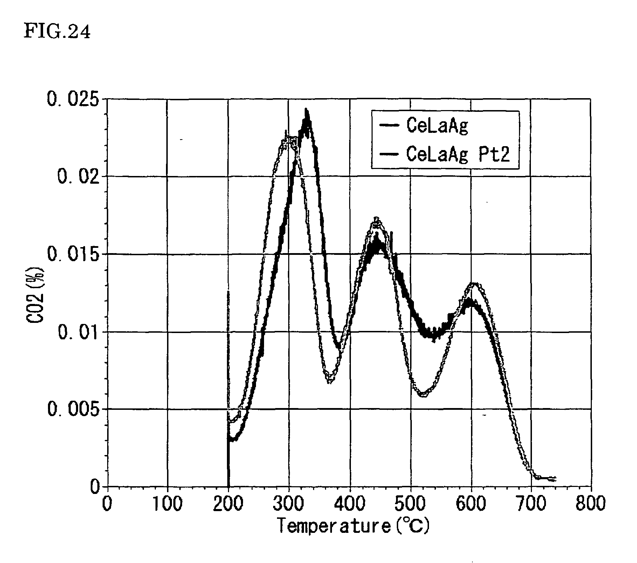

PM were deposited by employing the same method as that in the PM oxidation performance evaluation test 1 except that a substrate coated with $CeO_2$-Ag-La aggregates "CeLaAg" obtained in Example 1 and a Pt-supporting $CeO_2$-Ag-La substrate "CeLaAg-Pt2" obtained in Example 6 were used. The PM oxidation performances were measured with the $CO_2$ peaks. The obtained result is shown in Fig. 24.
As apparent from the result shown in Figs. 22 to 24, in the device for purification of exhaust gas of the present invention, it was confirmed that the purification temperatures for HC and CO can be reduced without sacrificing PM oxidation performance by further supporting Pt.

(Examples 7 to 13)

The following metal particles were used as catalytic metal supports.
Example 7: Ir particles, made by Wako Pure Chemical Industries, Ltd., 097-04811, 45 $\mu$m
Example 8: Ru particles, made by Wako Pure Chemical Industries, Ltd., 183-01641, 45 $\mu$m
Example 9: Ag particles, made by Kojundo Chemical Laboratory Co., Ltd., AGE04PB, about 75 to 150 $\mu$m Example 10: Ag particles, made by Vacuum Metallurgical Co., Ltd., Lot27-42-1
Example 11: Ag particles, made by Nisshin Engineering Inc., Lot No.13607327
Example 12: Ag-Pd particles, made by Nisshin Engineering Inc., DBET=50 nm, Lot No.13606C15A
Example 13: Cu particles, made by Kojundo Chemical Laboratory Co., Ltd., CUE08PB, about 1 $\mu$m
First, a solution was prepared by dissolving 50.46 g of $Ce(NO_3)_3 \cdot 6H_2O$ and 5.59 g of $La(NO_3)_3$ into 120 mL of water (Ce:La=9:1 (molar ratio)). Then, while the obtained solution was stirred, ammonia water was poured into the solution in a manner that the amount of ammonia was equal to the amount of the nitrate in the solution. The mixture was stirred to obtain precursor particles of La solid solution-containing $CeO_2$.
Subsequently, the obtained precursor particles and the catalytic metal support were mixed in a manner that the molar ratio of the metal constituting the support and cerium was 1:1. After being stirred, the mixture was calcinated for 5 hours at 500°C in air to obtain a device for purification of exhaust gas (aggregates being oxidation catalyst) of the present invention shown in Table 1.
It was confirmed that any of the oxidation catalysts obtained in Examples 7 to 13 had a structure in which secondary particles of the catalytic metal support was retained, and in which metal oxide particles having an average primary particle diameter of about 10 nm was supported on the surface of the secondary particles.
Moreover, in any of the oxidation catalysts obtained in Examples 7 to 13, it was observed by XRD that the metal constituting the catalytic metal support maintained the metal state after being calcinated at 500°C in air. Here, it was also observed that Cu particles and Pd particles had oxides thereof on their surfaces.

(Comparative Example 6)

Only La solid solution-containing $CeO_2$ particles, which were obtained by calcinating precursor particulates of La solid solution-containing $CeO_2$ used in Examples 7 to 13 for 5 hours at 500°C in air, were used for comparison.

(Examples 14 to 27)

The following metal particles were used as catalytic metal supports.
Example 14: Rh particles, made by Ishifuku Metal Industry Co., Ltd., M Type, 0.5 $\mu$m
Example 15: Ru particles, made by Wako Pure Chemical Industries, Ltd., 183-01641, 45 $\mu$m
Example 16: Cu particles, made by Kojundo Chemical Laboratory Co., Ltd., CUE08PB, about 1 $\mu$m
Example 17: Ag particles, made by Vacuum Metallurgical Co., Ltd., Lot27-42-1
Examples 18 to 27: Ag particles, made by Kojundo Chemical Laboratory Co., Ltd., AGE09PB, about 1 $\mu$m

The followings were used as metal oxide particles. Examples 14 to 18: La solid solution-containing $CeO_2$ particles obtained in Comparative Example 6

Example 19: $Fe_2O_3$ particulates, made by Wako Pure Chemical Industries, Ltd.

Example 20: $Co_3O_4$ particles, made by Kojundo Chemical Laboratory Co., Ltd.

Example 21: ZnO particles, made by Wako Pure Chemical Industries, Ltd.

Example 22: $SnO_2$ particles, made by Wako Pure Chemical Industries, Ltd.

Example 23: $TiO_2$ particles, made by ISHIHARA SANGYO KAISHA, LTD., TTO55A

Example 24: $ZrO_2$ particles, made by Daiichi Kigenso Kagaku Kogyo Co., Ltd., RC100

Example 25: $MnO_2$ particles, made by Wako Pure Chemical Industries, Ltd.

Example 26: $La_2O_3$ particles, made by Wako Pure Chemical Industries, Ltd.

Example 27: $Cr_2O_3$ particles, made by Wako Pure Chemical Industries, Ltd.

First, 1.0 g of the catalytic metal support and 1.0 g of the metal oxide particles were mixed by using a stirrer (MMPS-M1, made by AS ONE Corporation) and a magnet mortar (MP-02, made by AS ONE Corporation) for 3 minutes by electric mixing while the speed scale was set to "3". Moreover, a uniform mixture thus obtained was vigorously mixed by using an agate mortar to obtain a device for purification of exhaust gas (aggregates being oxidation catalyst) of the present invention shown in Table 2.

It was confirmed that any of the oxidation catalysts obtained in Examples 14 to 27 had a structure in which secondary particles of the catalytic metal support was retained, and in which metal oxide particles having an average primary particle diameter in a range from 1 to 400 nm was supported on the surface of the secondary particles.

(Comparative Example 7)

Only Ag particles (made by Kojundo Chemical Laboratory Co., Ltd., AGE09PB, about 1 μm) were used for comparison.

(Comparative Example 8)

For comparison, no oxidation catalyst was used.

<Soot oxidation performance evaluation test>

Measurement samples were prepared by mixing soot (carbon composition 99.9% or above) with $CeO_2$-Ag aggregates ($CeO_2$-Ag60, oxidation catalyst) obtained in Example 4, oxidation catalysts obtained in Examples 7 to 27, La solid solution-containing $CeO_2$ particles obtained in Comparative Example 6 and Ag particles in Comparative Example 7, by the following mixing method. Here, the mixing ratio between the oxidation catalysts and soot was 2:0.1 by weight ratio (g). Moreover, concerning Comparative Example 8, a measurement sample was prepared by using only soot.

To be specific, first, the above-described materials were mixed by using a stirrer (MMPS-M1, made by AS ONE Corporation) and a magnet mortar (MP-02, made by AS ONE Corporation) for 3 minutes by electric mixing while the speed scale was set to "3". Moreover, a uniform mixture thus obtained was vigorously mixed by using an agate mortar to obtain the measurement samples.

Then, a $CO_2$ peak temperature during temperature rising was measured for each measurement sample in accordance with the TG-mass method. "TG8120" (made by Rigaku Corporation) was used as the thermogravimetric analyzer. The thermogravimetric analyzer was connected to "GC-MS5972A" (made by Hewlett Packard Company), and mass spectra of gas components generated in the thermogravimetric analyzer were measured. As measurement conditions, the temperature was raised up to 800°C at a temperature rising rate of 20°C/min in an $O_2$-10%/He-balanced atmosphere. An m/e=44 component was measured as a $CO_2$ component generated by soot oxidation. The obtained results are shown in Table 1 and Table 2.

[Table 1]

| | Catalystic metal support | | | Metal oxide particles | | $CO_2$ peak temperature (°C) |
|---|---|---|---|---|---|---|
| | Component | Average primary particle diameter | Secondary particle diameter | Component | Average primary particle diameter | |
| Example 4 | Ag | ca. 29 nm | - | $CeO_2$ | ca. 11 nm | 295 |

(continued)

| | Catalystic metal support | | | Metal oxide particles | | $CO_2$ peak temperature (°C) |
|---|---|---|---|---|---|---|
| | Component | Average primary particle diameter | Secondary particle diameter | Component | Average primary particle diameter | |
| Example 7 | Ir | - | ca. 45 μm | La solid solution-containing $CeO_2$ | ca. 10 nm | 390 |
| Example 8 | Ru | - | ca. 45 μm | La solid solution-containing $CeO_2$ | ca. 10 nm | 380 |
| Example 9 | Ag | - | ca. 75-150 μm | La solid solution-containing $CeO_2$ | ca. 10 nm | 370 |
| Examples | 10 Ag ca. 47 | nm | ca. 1 μm or more | La solid solution-containing $CeO_2$ | ca. 10 mn | 360 |
| Example 11 | Ag | ca. 15 nm | ca. 0.5 μm or more | La solid solution-containing $CeO_2$ | ca. 10 nm | 355 |
| Example 12 | Ag-Pd | ca. 21 nm | ca. 0.5 μm or more | La solid solution-containing $CeO_2$ | ca. 10 nm | 345 |
| Example 13 | Cu | - | ca. 1 μm | La solid solution-containing $CeO_2$ containing $CeO_2$ | ca. 10 nm | 390 |
| Comparative Example 6 | None | - | - | La solid solution-containing $CeO_2$ | ca. 10 nm | 440 |
| Comparative Example 7 | Ag | ca. 90 nm | ca. 1 μm | None | - | 480 |
| Comparative Example 8 | None | - | - | None | - | 670 |

[Table 2]

| | Catalystic metal support | | | Metal oxide particles | | CO$_2$ peak temperature (°C) |
|---|---|---|---|---|---|---|
| | Component | Average primary particle diameter | Secondary particle diameter | Component | Average primary particle diameter | |
| Example 4 | Ag | ca. 29 nm | - | CeO$_2$ | ca. 11 nm | 295 |
| Example 14 | Rh | - | ca. 0.5 μm | La solid solution-containinq CeO$_2$ | ca. 10 nm | 390 |
| Example 15 | Ru | - | ca. 45 μm | La solid solution-containing CeO$_2$ | ca. 10 nm | 380 |
| Example 16 | Cu | - | ca. 1 μm | La solid solution-containing CeO$_2$ | ca. 10 nm | 400 |
| Example 17 | Ag | ca. 47 nm | ca. 1 μm or more | La solid solution-containing CeO$_2$ | ca. 10 nm | 340 |
| Example 18 | Ag | ca. 90 nm | ca. 1 μm | La solid solution-containing CeO$_2$ | ca. 10 nm | 340 |
| Examples 19 | Ag | ca. 90 nm | ca. 1 μm | Fe$_2$O$_3$ | ca. 200 nm | 340 |
| Example 20 | Ag | ca. 90 nm | ca. 1 μm | Co$_3$O$_4$ | ca. 10 nm | 335 |
| Example 21 | Ag | ca. 90 nm | ca. 1 μm | 2nO | ca. 10 nm | 345 |
| Example 22 | Ag | ca. 90 nm | ca. 1 μm | SnO$_2$ | ca. 46 nm | 370 |
| Example 23 | Ag | ca. 90 nm | ca. 1 μm | TiO$_2$ | ca. 24 nm | 380 |
| Example 24 | Ag | ca. 90 nm | ca. 1 μm | ZrO$_2$ | ca. 10 nm | 345 |
| Example 25 | Ag | ca. 90 nm | ca. 1 μm | MnO$_2$ | ca. 10 nm | 380 |
| Example 26 | Ag | ca. 90 nm | ca. 1 μm | La$_2$O$_3$ | ca. 49 nm | 380 |
| Example 27 | Ag | ca. 90 nm | ca. 1 μm | Cr$_2$O$_3$ | ca. 116 nm | 390 |
| Comparative Example 6 | None | - | - | La solid solution-containing CeO$_2$ | ca. 10 nm | 440 |
| Comparative Example 7 | Ag | ca. 90 nm | ca. 1 μm | None | - | 480 |
| Comparative Example 8 | None | - | - | None | - | 670 |

As apparent from the results shown in Table 1 and Table 2, it was confirmed that any of the devices for purification of exhaust gas (oxidation catalysts) of the present invention obtained in Example 4, Examples 7 to 13, Examples 14 to 16 and Examples 17 to 27 had low CO$_2$ peak temperatures and remarkably high soot oxidation performances compared with the metal oxide particles (Comparative Example 6) and the catalytic metal support (Comparative Example 7).

**Industrial Applicability**

As described above, according to the present invention, it is achieved a composition that oxygen reactive species particularly preferable for oxidation of particulate matters (PM) are generated, and that the oxygen reactive species are stably supplied under a condition where an oxidation catalyst is placed. Thus, according to a device for purification of exhaust gas of the present invention, particulate matters in exhaust gas emitted from an internal-combustion engine can efficiently be oxidized in a lower temperature range. The device can be regenerated by a relatively low temperature regeneration treatment even when the particulate matters are deposited therein.
Accordingly, the device for purification of exhaust gas of the present invention has an excellent PM purification performance. Therefore, this device is particularly useful as an exhaust gas purification device for purifying exhaust gas emitted from a diesel engine of a heavy track and other applications.

**Claims**

1. A device for purification of exhaust gas comprising an oxidation catalyst including: a particulate catalytic metal support (1) made of a first metal of at least one selected from the group consisting of Ag, Pt, Rh, Pd, Ru, Ir, Os, Au and Cu; and metal oxide particles (2) which are made of an oxide of a second metal having a variable valence, and which have an average primary particle diameter in a range from 1 to 100 nm, which are disposed on the particulate catalytic metal support (1), wherein, when the oxide of the second metal is any of $CeO_2$ and a composite oxide containing Ce, the oxide of the second metal optionally further includes at least one substance selected from the group consisting of La, Nd, Pr, Sm, Y, Ca, Ti, Fe, Zr, Al, Zn and Sn as an additive metal,
   wherein the oxidation catalyst is an aggregate, wherein
   said particulate catalytic metal support (1) constitutes a core; and
   said metal oxide particles (2) surround said particulate catalytic metal support (1), and
   wherein a molar ratio of the first metal and the second metal ([the first metal] : [the second metal]) is in a range from 10:90 to 80:20.

2. The device according to claim 1,
   wherein the first metal is an oxygen-reactive-species generating member which generates an oxygen reactive species by extracting oxygen from an oxygen-containing substance,
   the oxide of the second metal is an oxygen-reactive-species transporting member which is capable of transporting and/or storing the oxygen reactive species, and
   the oxidation catalyst functions as an oxygen-reactive-species supplying member.

3. The device according to claim 2,
   wherein the oxygen reactive species is an adsorbed oxygen species, preferably a molecular adsorbed oxygen species.

4. The device according to any one of claims 1 to 3,
   wherein the particulate catalytic metal support (1) has an average primary particle diameter of 7 nm or larger.

5. The device according to any one of claims 1 to 4,
   wherein a layer of the second metal oxide has a thickness of 10 $\mu$m or smaller.

6. The device according to any one of claims 1 to 5,
   wherein the first metal contains Ag, preferably is Ag.

7. The device according to any one of claims 1 to 6,
   wherein the second metal oxide is at least one selected from the group consisting of oxides of La, Ce, Pr, Nd, Pm, Sm, Eu, Gd, Tb, Dy, Ho, Er, Tm, Yb, Lu, Y, Zr, Fe, Ti, Al, Mg, Co, Ni, Mn, Cr, Mo, W, V, Zn and Sn, solid solutions thereof, and composite oxides thereof, preferably wherein the second metal oxide is any of $CeO_2$ and a composite oxide containing Ce, and further includes at least one substance selected from the group consisting of La, Nd, Pr, Sm, Y, Ca, Ti, Fe, Zr and Al as an additive metal.

8. The device according to any one of claims 1 to 7,
wherein the metal oxide particles (2) after calcination for 5 hours at 500°C in air have an average particle diameter in a range from 10 to 100 nm.

9. The device according to any one of claims 1 to 7,
wherein the metal oxide particles (2) after calcination for 5 hours at 800°C in an atmosphere containing oxygen at 10% by volume and nitrogen at 90% by volume have an average particle diameter in a range from 10 to 400 nm.

10. The device according to any one of claims 1 to 9, further comprising
a control means for controlling the device for purification of exhaust gas on the basis of a first criterion (A) of a particulate-matter deposit amount, on which a forced regeneration treatment is required, and a second criterion (B) of a particulate-matter deposit amount which is a lower criterion than the first criterion (A), and the control means controlling the device in a way that:

a low temperature regeneration treatment is performed at a second regeneration treatment temperature being lower than a first regeneration treatment temperature for the forced regeneration treatment, when an obtained particulate-matter deposit amount is between the first criterion (A) and the second criterion (B); and the forced regeneration treatment is performed, when an obtained particulate-matter deposit amount exceeds the first criterion (A).

11. The device according to claim 10,
wherein oxygen reactive species are continuously generated when the low temperature regeneration treatment is performed.

12. The device according to claim 10,
wherein oxygen reactive species are stored by the metal oxide particles (2) disposed on the particulate catalytic metal support (1) after the forced regeneration treatment is performed.

13. The device according to claim 10, wherein
the second regeneration treatment temperature is set to have a plurality of temperature conditions, and the device for purification of exhaust gas is controlled in a way that:

a low temperature regeneration treatment is performed at a lower temperature of the second regeneration treatment temperatures, when an obtained particulate-matter deposit amount is between the first criterion (A) and the second criterion (B);
the low temperature regeneration treatment is terminated, when a subsequent particulate-matter deposit amount is below the second criterion (B); and
low temperature regeneration treatments are repeated while each second regeneration treatment temperature is sequentially changed to a higher temperature, when the particulate-matter deposit amount is still between the first criterion (A) and the second criterion (B).

**Patentansprüche**

1. Vorrichtung zum Reinigen von Abgas, umfassend einen Oxidationskatalysator, welcher umfasst: einen teilchenförmigen Träger aus katalytischem Metall (1), der aus einem ersten Metall von mindestens einem, ausgewählt aus der Gruppe, bestehend aus Ag, Pt, Rh, Pd, Ru, Ir, Os, Au und Cu, hergestellt ist, und Metalloxidteilchen (2), die aus einem Oxid eines zweiten Metalls mit einer variablen Wertigkeit hergestellt sind und die einen durchschnittlichen Primärteilchendurchmesser in einem Bereich von 1 bis 100 nm aufweisen, welche auf dem teilchenförmigen Träger aus katalytischem Metall (1) angeordnet sind, wobei, wenn das Oxid des zweiten Metalls eines von $CeO_2$ und einem Ce-enthaltenden Mischoxid ist, das Oxid des zweiten Metalls gegebenenfalls ferner mindestens eine Substanz, die aus der Gruppe, bestehend aus La, Nd, Pr, Sm, Y, Ca, Ti, Fe, Zr, Al, Zn und Sn, ausgewählt ist, als ein Additivmetall umfasst,
wobei der Oxidationskatalysator ein Aggregat ist, worin
der teilchenförmige Träger aus katalytischem Metall (1) einen Kern bildet und
die Metalloxidteilchen (2) den teilchenförmigen Träger aus katalytischem Metall (1) umgeben, und
wobei das Molverhältnis des ersten Metalls und des zweiten Metalls ([das erste Metall] : [das zweite Metall]) in einem Bereich von 10:90 bis 80:20 liegt.

**2.** Vorrichtung nach Anspruch 1, bei der
das erste Metall ein eine Sauerstoff-reaktive Spezies erzeugendes Element ist, das eine Sauerstoff-reaktive Spezies durch Extrahieren von Sauerstoff aus einer Sauerstoffenthaltenden Substanz erzeugt,
das Oxid des zweiten Metalls ein eine Sauerstoff-reaktive Spezies transportierendes Element ist, das die Sauerstoff-reaktive Spezies transportieren und/oder Speichern kann, und
der Oxidationskatalysator als Element wirkt, das eine Sauerstoff-reaktive Spezies zuführt.

**3.** Vorrichtung nach Anspruch 2,
bei der die Sauerstoff-reaktive Spezies eine adsorbierte Sauerstoffspezies ist, vorzugsweise eine molekulare adsorbierte Sauerstoffspezies ist.

**4.** Vorrichtung nach einem der Ansprüche 1 bis 3,
bei welcher der teilchenförmige Träger aus katalytischem Metall (1) einen durchschnittlichen Primärteilchendurchmesser von 7 nm oder größer aufweist.

**5.** Vorrichtung nach einem der Ansprüche 1 bis 4,
bei der eine Schicht des zweiten Metalloxids eine Dicke von 10 $\mu$m oder weniger aufweist.

**6.** Vorrichtung nach einem der Ansprüche 1 bis 5, bei der das erste Metall Ag enthält, vorzugsweise Ag ist.

**7.** Vorrichtung nach einem der Ansprüche 1 bis 6,
bei der das zweite Metalloxid mindestens eines ist, das aus der Gruppe, bestehend aus Oxiden von La, Ce, Pr, Nd, Pm, Sm, Eu, Gd, Tb, Dy, Ho, Er, Tm, Yb, Lu, Y, Zr, Fe, Ti, Al, Mg, Co, Ni, Mn, Cr, Mo, W, V, Zn und Sn, festen Lösungen davon und Mischoxiden davon, ausgewählt ist, wobei vorzugsweise das zweite Metalloxid eines von CeO$_2$ und einem Ce-enthaltenden Mischoxid ist und ferner mindestens eine Substanz, die aus der Gruppe, bestehend aus La, Nd, Pr, Sm, Y, Ca, Ti, Fe, Zr und Al, ausgewählt ist, als ein Additivmetall umfasst.

**8.** Vorrichtung nach einem der Ansprüche 1 bis 7,
bei der die Metalloxidteilchen (2) nach einem Kalzinieren für 5 Stunden bei 500 °C in Luft einen durchschnittlichen Teilchendurchmesser in einem Bereich von 10 bis 100 nm aufweisen.

**9.** Vorrichtung nach einem der Ansprüche 1 bis 7,
bei der die Metalloxidteilchen (2) nach einem Kalzinieren für 5 Stunden bei 800 °C in einer Atmosphäre, die 10 Volumenprozent Sauerstoff und 90 Volumenprozent Stickstoff enthält, einen durchschnittlichen Teilchendurchmesser in einem Bereich von 10 bis 400 nm aufweisen.

**10.** Vorrichtung nach einem der Ansprüche 1 bis 9, weiter umfassend
eine Steuerungseinrichtung zum Steuern der Vorrichtung zum Reinigen von Abgas auf der Basis eines ersten Kriteriums (A) einer Abscheidungsmenge von teilchenförmigen Materialien, bei denen eine verstärkte Regenerationsbehandlung erforderlich ist, und eines zweiten Kriteriums (B) einer Abscheidungsmenge von teilchenförmigen Materialien, das ein schwächeres Kriterium als das erste Kriterium (A) ist, und
wobei die Steuerungseinrichtung die Vorrichtung in einer Weise steuert, dass
eine Niedertemperatur-Regenerationsbehandlung bei einer zweiten Regenerationsbehandlungstemperatur durchgeführt wird, die niedriger ist als eine erste Regenerationsbehandlungstemperatur für die verstärkte Regenerationsbehandlung, wenn eine erhaltene Abscheidungsmenge von teilchenförmigen Materialien zwischen dem ersten Kriterium (A) und dem zweiten Kriterium (B) liegt, und
die verstärkte Regenerationsbehandlung durchgeführt wird, wenn eine erhaltene Abscheidungsmenge von teilchenförmigen Materialien das erste Kriterium (A) übersteigt.

**11.** Vorrichtung nach Anspruch 10,
bei der Sauerstoff-reaktive Spezies kontinuierlich erzeugt werden, wenn die Niedertemperatur-Regenerationsbehandlung durchgeführt wird.

**12.** Vorrichtung nach Anspruch 10,
bei der Sauerstoff-reaktive Spezies durch die Metalloxidteilchen (2), die auf dem teilchenförmigen Träger aus katalytischem Metall (1) angeordnet sind, nach der Durchführung der verstärkten Regenerationsbehandlung gespeichert werden.

**13.** Vorrichtung nach Anspruch 10, bei der

die zweite Regenerationsbehandlungstemperatur so eingestellt wird, dass sie eine Mehrzahl von Temperaturbedingungen aufweist, und

die Vorrichtung zum Reinigen von Abgas so gesteuert wird, dass

eine Niedertemperatur-Regenerationsbehandlung bei einer niedrigeren Temperatur der zweiten Regenerationsbehandlungstemperaturen durchgeführt wird, wenn eine erhaltene Abscheidungsmenge von teilchenförmigen Materialien zwischen dem ersten Kriterium (A) und dem zweiten Kriterium (B) liegt,

die Niedertemperatur-Regenerationsbehandlung beendet wird, wenn eine nachfolgende Abscheidungsmenge von teilchenförmigen Materialien unterhalb des zweiten Kriteriums (B) liegt, und

Niedertemperatur-Regenerationsbehandlungen wiederholt werden, während jede zweite Regenerationsbehandlungstemperatur nacheinander zu einer höheren Temperatur verändert wird, wenn die Abscheidungsmenge von teilchenförmigen Materialien nach wie vor zwischen dem ersten Kriterium (A) und dem zweiten Kriterium (B) liegt.

**Revendications**

**1.** Dispositif pour la purification d'un gaz d'échappement comprenant un catalyseur d'oxydation comprenant : un support de métal catalytique particulaire (1) constitué d'un premier métal choisi parmi au moins un élément du groupe comprenant les éléments Ag, Pt, Rh, Pd, Ru, Ir, Os, Au et Cu ; et des particules d'oxyde de métal (2) qui sont constituées d'un oxyde d'un second métal ayant une valence variable, et qui ont un diamètre moyen de particule primaire dans une plage de 1 à 100 nm, qui sont disposées sur le support de métal catalytique particulaire (1), dans lequel, lorsque l'oxyde du second métal est choisi parmi l'un quelconque des oxydes de type $CeO_2$ et oxyde composite contenant l'élément Ce, l'oxyde du second métal comprend éventuellement en plus au moins une substance sélectionnée dans le groupe comprenant les éléments La, Nd, Pr, Sm, Y, Ca, Ti, Fe, Zr, Al, Zn et Sn comme métal additif, dans lequel le catalyseur d'oxydation est un agrégat, dans lequel

ledit support de métal catalytique particulaire (1) forme un noyau ; et

lesdites particules d'oxyde métallique (2) enveloppent ledit support de métal catalytique particulaire (1) et

dans lequel un rapport molaire du premier métal et du second métal ([premier métal] : [second métal]) se situe dans la plage de 10:90 à 80:20.

**2.** Dispositif selon la revendication 1,

dans lequel le premier métal est un élément générant une espèce réactive vis-à-vis de l'oxygène qui produit une espèce réagissant avec l'oxygène en extrayant l'oxygène à partir d'une substance contenant de l'oxygène, l'oxyde du second métal est un élément transportant l'espèce réactive vis-à-vis de l'oxygène, qui est capable de transporter et/ou de stocker l'espèce réactive vis-à-vis de l'oxygène, et

le catalyseur d'oxydation fonctionne comme un élément fournissant une espèce réactive vis-à-vis de l'oxygène.

**3.** Dispositif selon la revendication 2,

dans lequel l'espèce réactive vis-à-vis de l'oxygène est une espèce adsorbant l'oxygène, de préférence, une espèce adsorbant l'oxygène moléculaire.

**4.** Dispositif selon l'une quelconque des revendications 1 à 3,

dans lequel le support de métal catalytique particulaire (1) présente un diamètre moyen de particule primaire de 7 nm ou plus.

**5.** Dispositif selon l'une quelconque des revendications 1 à 4,

dans lequel une couche du second oxyde de métal présente une épaisseur de 10 $\mu$m ou moins.

**6.** Dispositif selon l'une quelconque des revendications 1 à 5,

dans lequel le premier métal contient l'élément Ag, de préférence, ce métal est l'Ag.

**7.** Dispositif selon l'une quelconque des revendications 1 à 6,

dans lequel le second oxyde de métal est au moins un oxyde choisi dans le groupe d'oxydes formés avec les éléments La, Ce, Pr, Nd, Pm, Sm, Eu, Gd, Tb, Dy, Ho, Er, Tm, Yb, Lu, Y, Zr, Fe, Ti, Al, Mg, Co, Ni, Mn, Cr, Mo, W, V, Zn et Sn, des solutions de solides de ceux-ci, et des oxydes composites de ceux-ci, de préférence, dans lequel le second oxyde de métal est un oxyde quelconque choisi parmi $CeO_2$ et un oxyde composite contenant du Ce, et comprend en outre au moins une substance sélectionnée dans le groupe comprenant les éléments La, Nd, Pr, Sm, Y, Ca, Ti, Fe, Zr et Al comme métal supplémentaire.

**8.** Dispositif selon l'une quelconque des revendications 1 à 7,
dans lequel les particules d'oxyde de métal (2) présentent, après une calcination de 5 heures à 500 °C à l'air, un diamètre particulaire moyen compris dans une plage de 10 à 100 nm.

**9.** Dispositif selon l'une quelconque des revendications 1 à 7,
dans lequel les particules d'oxyde de métal (2) présentent, après une calcination de 5 heures à 800 °C sous une atmosphère contenant de l'oxygène à 10 % en volume et de l'azote à 90 % en volume, un diamètre particulaire moyen compris dans une plage de 10 à 400 nm.

**10.** Dispositif selon l'une quelconque des revendications 1 à 9, comprenant en outre
un moyen de commande pour commander le dispositif pour la purification d'un gaz d'échappement sur la base d'un premier critère (A) d'une quantité de dépôt de matière particulaire, sur laquelle un traitement de régénération forcée est requis, et un second critère (B) d'une quantité de dépôt de matière particulaire qui est un critère inférieur au premier critère (A), et
le moyen de commande dirige le dispositif de sorte que :

un traitement de régénération à basse température soit effectué à une température de second traitement de régénération qui est inférieure à une température de premier traitement de régénération pour le traitement de régénération forcé, lorsqu'une quantité de dépôt de matière particulaire obtenue se situe entre le premier critère (A) et le second critère (B) ; et
le traitement de régénération forcé soit effectué lorsqu'une quantité de dépôt de matière particulaire obtenue dépasse le premier critère (A).

**11.** Dispositif selon la revendication 10,
dans lequel des espèces réactives vis-à-vis de l'oxygène sont générées de manière continue lorsque le traitement de régénération à basse température est mis en oeuvre.

**12.** Dispositif selon la revendication 10,
dans lequel les espèces réactive vis-à-vis de l'oxygène sont stockées par les particules d'oxyde de métal (2) disposées sur le support de métal catalytique particulaire (1) après que le traitement de régénération forcé a été mis en oeuvre.

**13.** Dispositif selon la revendication 10, dans lequel
la température du second traitement de régénération est réglée pour présenter une pluralité de conditions de température, et
le dispositif pour purifier le gaz d'échappement est commandé de la manière suivante :

on met en oeuvre un traitement de régénération à basse température à une température inférieure à la température de second traitement de régénération lorsqu'une quantité de dépôt de matière particulaire obtenue se situe entre le premier critère (A) et le second critère (B) ;
on arrête le traitement de régénération à basse température lorsqu'une quantité de dépôt de matière particulaire obtenue est inférieure à celle du second critère (B) ; et
on répète les traitements de régénération à basse température, tandis que l'on modifie de manière séquentielle la température du second traitement de régénération à une température plus élevée, lorsque la quantité de dépôt de matière particulaire se situe toujours entre le premier critère (A) et le second critère (B).

FIG.1

FIG.2

FIG.3

FIG.4

START

CALCULATE PM DEPOSIT AMOUNT — STEP 1

PM DEPOSIT AMOUNT ≥ (B) — STEP 2

No

(A) ≥ PM DEPOSIT AMOUNT — STEP 3

No

FORCED REGENERATION TREATMENT — STEP 5

Yes

Yes

LOW TEMPERATURE REGENERATION TREATMENT — STEP 4

END

FIG.5

```
┌────────────────────────┐
│ LOW TEMPERATURE        │
│ REGENERATION TREATMENT │
└────────────────────────┘
             │
             ▼                          STEP 1
      ┌──────────────┐
      │    i=1        │
      └──────────────┘
             │
             ▼                  STEP 2
┌──────────────────────────────────┐
│ LOW TEMPERATURE REGENERATION     │◄────────┐
│   TREATMENT AT TEMPERATURE Ti    │         │
└──────────────────────────────────┘         │
             │                                │
             ▼         STEP 3                 │
      ┌──────────────┐                        │
      │ CALCULATE Xi │                        │
      └──────────────┘                        │
             │                                │
             ▼   STEP 4        STEP 5     STEP 6
          ◇        ◇            ┌────────┐
        (B)>Xi ──► i=e  ──►    │ i=i+1  │
          ◇   No   ◇   No       └────────┘
          │         │
        Yes        Yes
          │◄────────┘
          ▼
      ┌──────────┐
      │   End    │
      └──────────┘
```

FIG.6

2.5kV ×100k SE                                    500nm

FIG.7

Caption/axes: ACCUMULATION (%) vs PARTICLE DIAMETER (μm); legend: — CeO2-Ag60

FIG.8

FIG.9

FIG.10

FIG.11

FIG.12

FIG.13

FIG.14

FIG.15

FIG.16

INLET GAS TEMPERATURE (°C)

FIG.17

FIG.18

FIG.19

FIG.20

FIG.21

EP 2 119 491 B1

FIG.22

FIG.23

FIG.24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI1318715 B
- JP 2004042021 A
- JP 2006198563 A
- JP 2005329318 A
- WO 2004043591 A1

**Non-patent literature cited in the description**

- *Applied Catalysis B,* 2004, vol. 50, 185-194